# EUROPEAN PATENT APPLICATION

(11) **EP 4 578 524 A1**
(43) Date of publication of application: **02.07.2025**
(21) Application number: 23857288.7
(22) Date of filing: 18.08.2023
(51) Int. Cl.: A63F 13/79, A63F 13/795

(54) **PROGRAM AND INFORMATION PROCESSING DEVICE**

(30) Priority: 22.08.2022 JP 2022131731
(71) Applicant: COLOPL, INC., Tokyo 107-0052 (JP)
(72) Inventor: YAMAZAKI, Satoshi, Tokyo 107-0052 (JP); NAKAMAE, Shuta, Tokyo 107-0052 (JP)
(74) Representative: Gille Hrabal Partnerschaftsgesellschaft mbB Patentanwälte
(86) International application number: PCT/JP2023/029776
(87) International publication number: WO 2024/043176

(57) **Abstract**

A program causes a computer to function as an association unit which automatically associates, with a first user, a second user who has decided to share, is sharing, or has shared a predetermined experience in a predetermined service with the first user.

## Description

### TECHNICAL FIELD

The present invention relates to a program and an information processing apparatus.

### BACKGROUND ART

Up to now, a service such as a game in which each user can register another user as a friend or follow another user has been proposed (see, for example, Patent Document 1).

### Prior Art Documents

### Patent Document

Patent Document 1: Japanese Patent Application Publication No. 2013-188456

### SUMMARY OF INVENTION

### TECHNICAL PROBLEM

In a service in which another user can be associated with a user such as friend registration or follow, an issue occurs that it is difficult to perform the association.

The present invention has been made in view of the above circumstance and aims to provide a service in which association between users is easily performed.

### SOLUTION TO PROBLEM

According to an aspect of an embodiment illustrated in the present disclosure, there is provided a program for causing a computer to function as:
an association unit which automatically associates, with a first user, a second user who has decided to share, is sharing, or has shared a predetermined experience in a predetermined service with the first user.

### EFFECT OF THE INVENTION

According to an aspect of the present invention, a service is provided in which association between users is easily performed.

### BRIEF DESCRIPTION OF THE DRAWINGS

Fig. 1 illustrates a schematic configuration of a system.
Fig. 2 is a block diagram illustrating a functional configuration of the system.
Fig. 3 illustrates an example of an associated user list display screen.
Fig. 4 illustrates an example of a development information input screen.
Fig. 5A illustrates an example of a classification list display screen.
Fig. 5B illustrates an example of a classification list display screen.
Fig. 6A illustrates an example of display of a classification list.
Fig. 6B illustrates an example of display of a classification list.
Fig. 7 is a flowchart illustrating an example of processing of automatically associating another user with a user.
Fig. 8 is a flowchart illustrating an example of processing of automatically releasing the association of the other user with the user.
Fig. 9 is a flowchart illustrating an example of processing related to input of development information.
Fig. 10 is a flowchart illustrating an example of processing related to creation and display of the classification list.
Fig. 11 is a flowchart illustrating an example of the processing related to the creation and the display of the classification list.

### DESCRIPTION OF EXEMPLARY EMBODIMENTS

Hereinafter, embodiments of the present invention will be described with reference to the drawings.

### Hardware configuration of system

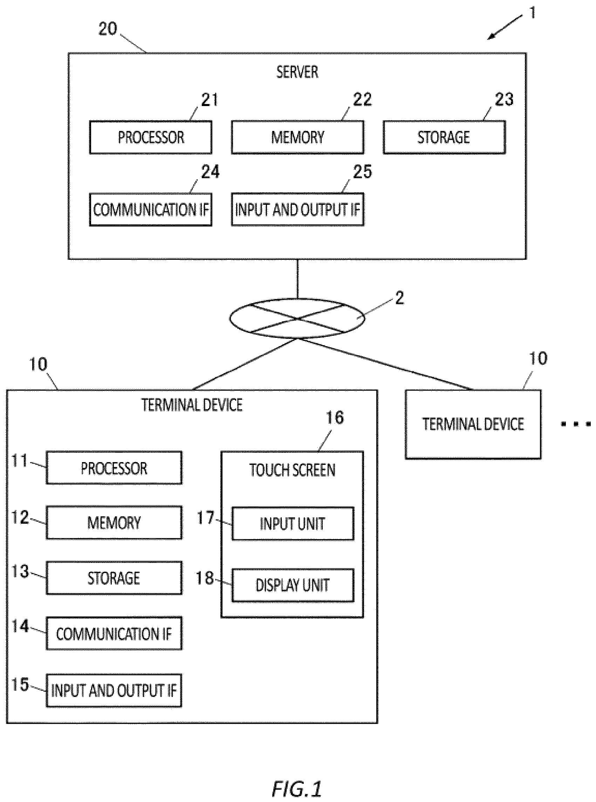

As illustrated in Fig. 1, a system 1 of the present embodiment includes a plurality of terminal devices 10 and a server 20.

The terminal devices 10 and the server 20 are connected via a network 2. The network 2 may be configured, for example, by any of the Internet, a mobile communication system (for example, 3G, 4G, 5G, LTE (Long Term Evolution), or the like), WiFi (Wireless Fidelity), BLUETOOTH (registered trademark), other communication lines, a combination of these, or the like. It does not matter whether the connection between the terminal device 10 and the server 20 is wired connection or wireless connection.

The server 20 (in other words, a computer or an information processing apparatus) may be, for example, a general purpose computer such as a work station or a personal computer. The server 20 includes a processor 21, a memory 22, a storage 23, a communication IF (interface) 24 and an input and output IF 25. These components included in the server 20 are mutually connected by a communications bus.

The processor 21 controls an entire operation of the server 20. The processor 21 may include a CPU (Central Processing Unit), an MPU (Micro Processing Unit), a GPU (Graphics Processing Unit), and the like. The processor 21 reads a program from the storage 23 to be deployed into the memory 22. The processor 21 performs the deployed program.

The memory 22 is a primary storage device. The memory 22 is configured, for example, by a storage device such as a ROM (Read Only Memory) and a RAM (Random Access Memory). The memory 22 provides a work region to the processor 21 by temporarily storing the program read by the processor 21 from the storage 23 and various types of data. The memory 22 also temporarily stores various types of data generated while the processor 21 operates according to the programs.

Note that the program in the present embodiment may be a program in which a predetermined service (in other words, an application) such as a game is achieved by the terminal device 10. The program may be a program in which the predetermined service is achieved by cooperation of the terminal device 10 and the server 20. Note that the predetermined service achieved by the cooperation of the terminal device 10 and the server 20 may be, as an example, a service provided on a browser activated in the terminal device 10. The program may be a program in which the predetermined service is achieved by cooperation of the plurality of terminal devices 10. Various types of data include, for example, data related to a service such as user information and service information, and an instruction and a notice transmitted and received between the terminal device 10 and the server 20.

The storage 23 is an auxiliary storage device. The storage 23 is configured, for example, by a storage device such as a flash memory or a HDD (Hard Disk Drive). The storage 23 stores various types of data related to a service.

The communication IF 24 controls transmission and reception of various types of data via a network between the server 20 and the terminal device 10 or the like.

The input and output IF 25 is an interface for the server 20 to accept an input of data and also an interface for the server 20 to output data. The input and output IF 25 may include, for example, an input unit serving as information input equipment such as a mouse or a keyboard and a display unit serving as equipment which performs display output of an image.

The terminal device 10 (in other words, the computer or the information processing apparatus) may be, for example, a smartphone, a feature phone, a PDA (PERSONAL DIGITAL ASSISTANT) (registered trademark), a tablet type computer, a personal computer, a wearable terminal, a game device, or the like. The terminal device 10 may be a mobile terminal. The terminal device 10 may be a portable terminal when a user receives provision of a service (for example, when a game to be performed).

The terminal device 10 includes a processor 11, a memory 12, a storage 13, a communication IF 14, an input and output IF 15, an input unit 17, and a display unit 18. These components included in the terminal device 10 are mutually connected by the communications bus.

The processor 11 controls an entire operation of the terminal device 10. The processor 11 may include a CPU, an MPU, a GPU, and the like. The processor 11 reads a program from the storage 13 to be deployed into the memory 12. The processor 11 performs the deployed program.

The memory 12 is a primary storage device. The memory 12 is configured, for example, by a storage device such as a ROM and a RAM. The memory 12 provides a work region to the processor 11 by temporarily storing the program read from the storage 13 by the processor 11 and various types of data. The memory 12 also temporarily stores various types of data generated while the processor 11 operates according to the programs.

The storage 13 is an auxiliary storage device. The storage 13 is constituted, for example, by a storage device such as a flash memory or an HDD. The storage 13 stores various types of data related to a service.

The communication IF 14 controls transmission and reception of various types of data via the network between the terminal device 10 and the server 20 or the like.

The input and output IF 15 is an interface for the terminal device 10 to accept an input of data and also an interface for the terminal device 10 to output data. The input and output IF 15 may perform input and output of data via, for example, a USB (Universal Serial Bus) or the like. The input and output IF 15 may include the input unit 17, the display unit 18, or the like.

The input unit 17 accepts an input by the user. The input unit 17 may be, for example, a pointing device such as a touch pad. The display unit 18 displays an image. The display unit 18 may be, for example, a liquid crystal display, an organic EL (ElectroLuminescence) display, or the like. The terminal device 10 includes, for example, a touch screen 16 that is an electronic component obtained by combining the input unit 17 and the display unit 18.

The input unit 17 has a function of sensing a position which has been input on an input surface through an operation of the user (for example, a touch operation, a tap operation, a sliding operation, a swipe operation, a flick operation, a pinch-in operation, a pinch-out operation, and the like) and transmitting information representing a sensed position as an input signal. The touch panel serving as the input unit 17 can adopt a capacitive sensing method, a resistive film method, or the like, but other methods may be adopted.

Note that the input unit 17 may be, for example, a keyboard, various types of physical buttons, various types of sensors, (for example, an acceleration sensor, an angular rate sensor, or the like), an operation stick, a camera, a microphone, or the like. The display unit 18 may be, for example, a projector or the like.

### Functional configuration of system

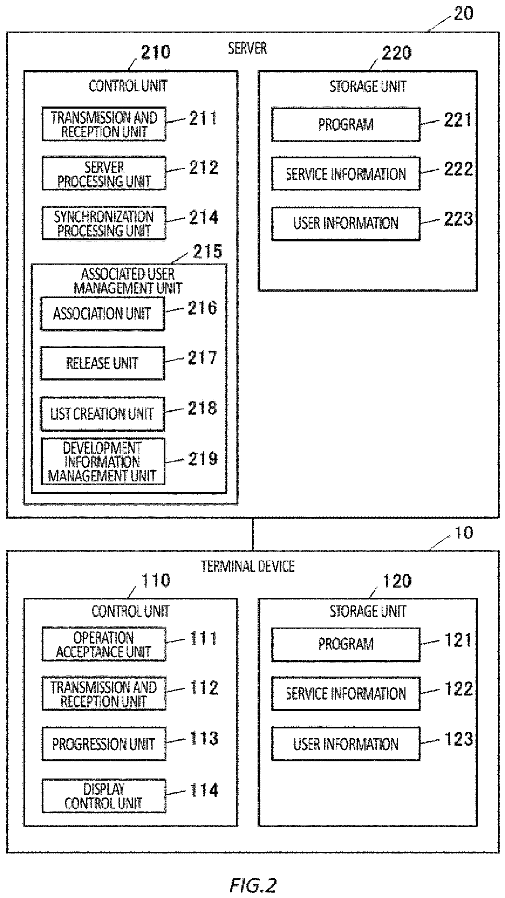

Fig. 2 is a block diagram illustrating a functional configuration of the server 20 and the terminal device 10. The server 20 in the present embodiment has, for example, a function of providing each of the terminal devices 10 with various types of data and a program required to provide a service, a function of collecting and managing data related to the service from each of the terminal devices 10, a function of performing synchronization processing between the plurality of terminal devices 10, and the like.

Note that in the present embodiment, the server 20 identifies each user and the terminal device 10 by using an account of the user registered in advance. A registration method of the accounts is not particularly limited. For example, the terminal device 10 or another device such as a personal computer may transmit information required for user account registration to the server 20 based on an operation of the user, and the server 20 may create and save an account of each user based on the received information. Each user accesses the server 20 from their own terminal device 10 and logs in with their own account to use a service (in other words, an application) of the present embodiment. Note that hereinafter, a case of the terminal device 10 of a certain user refers to the terminal device 10 or the like logged in by the certain user with their own account.

As illustrated in Fig. 2, the server 20 functions as a control unit 210 and a storage unit 220 through cooperation of the processor 21, the memory 22, the storage 23, the communication IF (interface) 24, the input and output IF 25, and the like. The storage unit 220 stores various types of data to be used by the control unit 210. The various types of data include, for example, a program 221, service information 222, and user information 223.

The program 221 is a program for achieving a service. The service information 222 and the user information 223 are data referred to when the control unit 210 performs the program 221.

Note that the program 221 may include, in addition to the program to be performed on the server 20 side, a program (which is a program 121 described below) transmitted to the terminal device 10 to be performed on the terminal device 10 side. Alternatively, the storage unit 220 may store the program 221 to be performed on the server 20 side and the program to be performed on the terminal device 10 side.

The service information 222 is information that is common among accounts. The service information 222 includes, for example, information for defining various types of virtual spaces. The virtual space refers to a space in which an object such as a character of the user is arranged. The service information 222 includes, for example, various types of setting information related to common objects among the accounts such as an arrangement position, a size, a color, a shape, or the like of a background object such as a building, a tree, or a stone arranged in the virtual space or a non player character (NPC). The service information 222 includes, for example, setting values or the like of various types of parameters of the non player character. Hereinafter, an object of a character arranged in the virtual space may be simply referred to as a "character".

The user information 223 is information to be managed for each account of the service. The user information 223 includes, for example, information related to the character of the user, information related to an associated user described below, information related to a possessed asset, information representing a progression degree of a game or the like, and other information. Examples of the possessed asset include, for example, a currency and an item in the virtual space.

By performing the program 221 stored in the storage unit 220, the control unit 210 controls various types of processing related to the service. The control unit 210 includes, for example, a transmission and reception unit 211, a server processing unit 212, a synchronization processing unit 214, and an associated user management unit 215.

The transmission and reception unit 211 transmits or receives various types of data. The transmission and reception unit 211 receives, for example, transmission requests of various types of data and a program, a request of synchronization processing to be compatible with a multi-play function, data subjected to the synchronization processing, and the like from each of the terminal devices 10 and passes those to the server processing unit 212. The transmission and reception unit 211 transmits various types of data including an instruction or the like to synchronize and a program to each of the terminal devices 10 according to control by the server processing unit 212.

In the present embodiment, the multi-play function is a function of providing a service in a state in which a plurality of accounts are synchronized with each other. The server 20 and the terminal device 10 in the system 1 perform various types of processing to be compatible with the multi-play function in a case where a plurality of accounts logged in to the system 1 use predetermined content together (for example, a case where a game is played together) or the like.

The server processing unit 212 provides the service to the terminal device 10 by performing arithmetic processing described in the program 221 in response to a request or the like from the terminal device 10. When, for example, the request of the synchronization processing to be compatible with the multi-play function or the data subjected to the synchronization processing is received from the terminal device 10 via the transmission and reception unit 211, the server processing unit 212 performs the synchronization processing to be compatible with the multi-play function. The server processing unit 212 commands the transmission and reception unit 211 with a transmission instruction of the service information 222 or the user information 223.

The synchronization processing unit 214 performs the synchronization processing to be compatible with the multi-play function according to the command from the server processing unit 212. For example, when the server 20 transmits information to the plurality of terminal devices 10, by simultaneously transmitting the information to each of the terminal devices 10, the synchronization processing unit 214 realizes synchronization in a game or the like in progression between each of the terminal devices 10. Specifically, the synchronization processing unit 214 simultaneously transmits operation information received in a predetermined period of time (for example, one frame) from the terminal device 10 corresponding to each account to each of the terminal devices 10 every predetermined period of time. The operation information is information related to an operation input to the terminal device 10. Timing for synchronization or information to be synchronized may be received from the server processing unit 212 when needed. By performing the synchronization processing, a phenomenon in the service which is caused by an operation input by one terminal device 10 can be simultaneously reflected on other terminal devices 10.

The associated user management unit 215 performs control related to association between users. The associated user management unit 215 includes an association unit 216, a release unit 217, a list creation unit 218, and a development information management unit 219. Control by the associated user management unit 215 will be described below in detail.

The terminal device 10 in the present embodiment has, for example, a function as an input device which accepts an input operation of the user, a function as an output device which outputs an image or voice related to the service, and the like.

The terminal device 10 functions as a control unit 110 and a storage unit 120 through cooperation of the processor 11, the memory 12, the storage 13, the communication IF 14, the input and output IF 15, and the like. The storage unit 120 stores various types of data to be used by the control unit 110. Examples of the various types of data include, for example, a program 121, service information 122, and user information 123.

The program 121 is a program for achieving a service on the terminal device 10 side. The service information 122 and the user information 123 are data to be referred to when the control unit 110 performs the program 121.

The service information 122 includes information similar to the service information 222 of the server 20 described above. Accordingly, herein, a description of the service information 122 will be omitted.

The user information 123 is data related to an account of the user who uses the terminal device 10 and includes information similar to the user information 223 of the server 20 described above. Accordingly, herein, a description of the user information 123 will be omitted.

By performing the program 121 stored in the storage unit 120, the control unit 110 controls various types of processing related to the service performed in the terminal device 10. The control unit 110 includes, for example, an operation acceptance unit 111, a transmission and reception unit 112, a progression unit 113, and a display control unit 114.

The operation acceptance unit 111 accepts an operation (hereinafter, also referred to as an input operation) which is input by the user via the input unit 17. Specifically, in a case where an input operation on the input unit 17 is performed, the operation acceptance unit 111 senses coordinates of an input position and a type of the input operation. Examples of a type of the input operation include, for example, various types of operations using a hand finger or the like, such as a touch operation, a tap operation, a sliding operation, a swipe operation, a flick operation, a pinch-in operation, a pinch-out operation, and the like. The input operation may include not only an operation of physically contacting the input unit 17 (for example, the touch screen 16) but also a non-contact operation. Note that an operation of ending the input operation which has been performed so far, such as a touch-off operation of ending the contact with the touch screen 16 can be regarded as one mode of the input operation.

Herein, the operation acceptance unit 111 can also accept an input operation carried out by using operation equipment connected via the input and output IF 15 similarly as in the input operation on the input unit 17.

The transmission and reception unit 112 transmits and receives various types of data. Hereinafter, a description will be provided with a specific example.

The transmission and reception unit 112 transmits the service information 122 or the user information 123, a synchronization request to be compatible with the multi-play function, or the like to the server 20. The transmission and reception unit 112 receives various types of data, the program, data for synchronization to be compatible with the multi-play function, and the like from the server 20. The data for synchronization includes, for example, synchronization instruction data for an instruction to synchronize between each of the terminal devices 10 which participate in a multi-play. The synchronization instruction data includes, for example, data subjected to synchronization, a type of the data, data for identifying a time for synchronization.

The transmission and reception unit 112 transmits the operation information related to the input operation accepted by the operation acceptance unit 111 to the server 20. The transmission and reception unit 112 receives the operation information related to the operation input by another user in another terminal device 10 from the server 20.

The progression unit 113 performs various types of processing related to progression of a service (for example, progression of a game). Hereinafter, a description will be provided with a specific example.

The progression unit 113 defines a virtual space based on information for defining a virtual space which is included in the service information 122. The progression unit 113 arranges an object in the virtual space based on setting information of the object which is included in the service information 122. The progression unit 113 controls the object arranged in the virtual space. Specifically, the progression unit 113 controls the object to change a position, an orientation, a shape, a color, or the like of the object in the virtual space and to cause the object to perform a predetermined operation.

The progression unit 113 defines a virtual camera for designating a region to be presented to the user in the virtual space. The progression unit 113 arranges the virtual camera in the virtual space by defining a position and an orientation of the virtual camera in the virtual space. The progression unit 113 instructs the display control unit 114 to generate a visual field area defined by the virtual camera and an image depicting an object arranged in this visual field area.

The position and the orientation of the virtual camera can be appropriately decided for each virtual space. For example, the progression unit 113 arranges the virtual camera such that a specific object is positioned in a center of the visual field area in a specific orientation while a position and an orientation of the specific object are set as references. At this time, the progression unit 113 adjusts the position and the orientation of the virtual camera by using a direction, a distance, and an angle with respect to the specific object. The specific object may be, for example, a dynamic object such as a character of the user or a non player character or may be a static object such as a building, a tree, or a stone. The dynamic object includes a character which individually operates based on an operation of each user and a character (for example, a non player character or the like) which operates based on the programs 121 and 221.

The progression unit 113 interprets instruction content of the user based on coordinates of an input position sensed by the operation acceptance unit 111, a type of the input operation, and the like. The progression unit 113 performs various types of determination processing concerning progression of the service based on the interpreted instruction content or the like. The progression unit 113 carries out progression of the service while the object, the virtual camera, and the like are controlled based on a result of the determine processing or the like. The progression unit 113 updates, adds, or deletes the service information 122 or the user information 123 according to a progression situation of the service.

The display control unit 114 causes the display unit 18 to display an image. Hereinafter, a description will be provided with a specific example.

The display control unit 114 generates an image depicting a region of a field of view of the virtual camera defined by the progression unit 113 in the virtual space and an object existing in the region and causes the display unit 18 to display those. The display control unit 114 can depict an object concerning a UI (User Interface) required for various operations of the service such as, for example, an icon, a button, and a menu representing various types of parameters to be superposed on the image caused to be displayed by the display unit 18.

Note that functions of the terminal device 10 and the server 20 illustrated in Fig. 2 are only examples. Each device of the terminal device 10 and the server 20 may include at least part of functions included in another device. In other words, the server 20 may include part or whole of functional blocks included in the terminal device 10 in the present embodiment, or the terminal device 10 may include part or whole of functional blocks included in the server 20. A configuration may be adopted in which each device of the terminal device 10 and the server 20 is not achieved by integrated equipment, or the device may be achieved, for example, by a plurality of pieces of equipment connected via a network or the like. The system 1 may be configured by only the terminal device 10 or the server 20, for example. In other words, a configuration may be adopted in which the system 1 is not achieved by a plurality of pieces of equipment connected via the network.

### Processing according to the present embodiment

Next, processing according to the present embodiment will be described. Note that in the present embodiment, a description will be provided where each processing described below is to be performed when the processor 21 of the processor 11 or the server 20 of the terminal device 10 performs the program stored in the system 1. Note however that at least part of the processing to be performed by the processor 11 that is the processing described below may be performed by a processor different from the processor 11. At least part of the processing to be performed by the processor 21 that is the processing described below may be performed by a processor different from the processor 21. In other words, a computer which performs the program in the present embodiment may be any of the terminal device 10 and the server 20 or may be achieved by a combination of a plurality of devices.

A service provided by the system 1 of the present embodiment (in other words, an application performed by the system 1) may be, for example, a game, may be an SNS (Social Networking Service), or may be a service related to Metaverse or the like.

In the service of the present embodiment, the user can register another user as a friend. The friend refers to a relationship in which the certain user and the other user are mutually associated. In other words, the friend refers to a relationship in which one user is associated with another user, and also another user is associated with one user. That is, in a case where a second user is a friend from a perspective of a first user, the first user is a friend from a perspective of the second user. The friend may be a relationship which is established based on mutual consents between a certain user and another user.

In the service of the present embodiment, a user can follow another user. The follow refers to a state in which a certain user registers another user to be associated with themselves. That is, in a case where a first user follows a second user, it does not necessarily mean that the second user follows the first user. The follow may be a relationship which may be established based on a one-sided intention.

Information representing another user associated with each user is stored in the storage unit 220 as the user information 223. Note that the information may be stored in the storage unit 120 as the user information 123. The information may be any information as long as the user associated with each user (for example, a friend or a following user of each user) is identifiable. Specifically, the user who is the friend or the following user of each user may be managed by using, for example, a user ID (in other words, identification information) with which each user is uniquely identifiable to link and store a user ID of another user associated with each user to the user ID of each user. That is, in a case where for a certain user, another user is registered as a friend or a following friend, a user ID of the other user may be linked to a user ID of the certain user and stored in the storage unit 220.

Note that with regard to their own friend, each user may be able to more easily view (in other words, check) information related to a user (for example, information representing whether or not the user is logged in, information issued by the user, information related to a rank which will be described below of the user, or the like) with their own terminal device 10 as compared with a user who is not a friend. In other words, in a case where a user is a friend with another user, as compared with a case where the user is not a friend with the other user, the user may be more advantageous in terms of viewing of information related to the other user. Note that being advantageous in terms of viewing of the information includes a case where trouble involved in viewing is small such as a number of operations in the terminal device 10 required for the viewing being small, a case where a temporal restriction related to the viewing is small, a case where specific information can be viewed which cannot be viewed in another case, or the like. For example, a function which can only be used with their own friend may exist in the service. Specifically, a specific function, a specific game, or the like which can only be performed with their own friend may exist in the service. A configuration may be adopted in which a predetermined message can only be transmitted to or received from their own friend in the service. A configuration may be adopted in which exchange of a possessed asset (for example, handing-over of an item) can only be performed with their own friend in the service. In other words, the friend may be referred to a user who can use a function which is a predetermined function in the service and which cannot be used with a user who is not a friend (for example, a function which cannot be used even with a following user). Note that the function may be a function or the like with which matching with a friend (in other words, using specific content together (for example, participating in a same battle, event, or the like)) is facilitated.

For their own following user, as compared with a non-following user (who is not also a friend), each user may be able to more easily view (confirm) information related to the user with their own terminal device 10. In other words, in a case where a user follows another user, as compared with a case where the user does not follow the other user, the user may be more advantageous in terms of viewing of information related to the other user. For example, a function which can only be used with their own following user may exist in the service. In other words, the following user may be referred to a user who can use a function which is a predetermined function in the service and which cannot be used with a non-following user (who is not also a friend). Note that a case where one user follows another user and the another user does not follow the one user may exist. In this case, as compared with the another user, the one user may be more advantageous in terms of viewing of information related to the other party. Specifically, for example, a configuration or the like may be adopted in which the one user can view specific information related to the another user, but the another user cannot view specific information related to the one user.

### Automatic association

The association unit 216 identifies another user who shares a predetermined experience with a certain user (hereinafter, also referred to as a first user) in a service. The association unit 216 automatically registers the identified other user as a friend of the user. In other words, the association unit 216 automatically mutually associates the identified other user and the user. Furthermore, in other words, the association unit 216 performs association processing of mutually associating the identified other user and the user without intermediation of an operation of instructing the association by the user and an operation of instructing the association by the other user. Note that hereinafter, any user among a plurality of users who use a service may be referred to as a first user. A user other than the first user, such as another user to be automatically registered as a friend of the first user who is identified by the association unit 216, may be referred to as a second user.

Sharing of an experience in the service includes following examples. That is, sharing of a predetermined experience may be, for example, "performing a same quest in a game". The sharing of the predetermined experience may be, for example, "participating in a same event in a virtual space". The sharing of the predetermined experience may be, for example, "having a conversation in a virtual space (including, for example, a conversation or the like through a text message)". The sharing of the predetermined experience may be, for example, "watching a same video (for example, a live video or a specific scene in a game)". The sharing of the predetermined experience may be, for example, "using content in a same category (for example, an event or a video)". The sharing of the predetermined experience may be, for example, "visiting (in other words, staying in) a same location in a virtual space". Note that a position of a user in a virtual space herein may be connected to (in other words, according to) a position of the user in a real world (for example, a position of the terminal device 10 of the user).

Another user who shares a predetermined experience with the user in the service may be, for example, another user who is sharing, may be another user who has shared, or may be another user who has decided to share the predetermined experience. Herein, another user who has decided to share the predetermined experience means, for example, another user for whom the association unit 216 can make a determination as to whether or not another user is decided to share the predetermined experience (for example, another user or the like whose plan with regard to sharing of the predetermined experience is scheduled in the service) such as another user who has been matched in the game, another user who reserves a participation in a predetermined event in the service, or another user who is in a location to wait for a predetermined event in the virtual space (for example, a so-called lobby or the like), and does not include a user or the like who has merely promised to play a game together in the real world.

Another user who shares a predetermined experience with the user in the service may be, for example, another user who uses predetermined content together with the user in the service. In other words, another user who shares the predetermined experience with the user in the service may be, for example, another user who is using together, may be another user who has used together, or may be another user who has decided to use together the predetermined content.

Using predetermined content together in the service includes following examples. That is, using the predetermined content together may be, for example, "participating in a predetermined battle or quest together in a game (for example, participating as an ally or an enemy)". Using the predetermined content together may be, for example, "participating in a predetermined event together in a virtual space". Using the predetermined content together may be, for example, "participating in a same group chat in an SNS, a game, or the like". Using the predetermined content together may be, for example, "watching a predetermined video (for example, a live video or a specific scene in a game) together".

The association unit 216 identifies another user who shares a predetermined experience with the first user as another user to be automatically registered as a friend, but at this time, specifically, may identify another user having a predetermined relationship with the first user in the service who is another user who shares a predetermined experience with the first user as another user to be automatically registered. In other words, in a case where another user who shares the predetermined experience with the first user is automatically registered as a friend, the association unit 216 may automatically register the other user as a friend under a condition that the other user has a predetermined relationship with the first user. Hereinafter, an example of the predetermined relationship will be described.

The predetermined relationship may be, for example, "a relationship in which a positional relationship in the service is a specific relationship". Specifically, the predetermined relationship may be, for example, "a relationship in which each of them belongs to a group of people (for example, a so-called team, party, guild, or the like) who cooperate for a predetermined purpose". The predetermined relationship may be, for example, "a relationship in which each of them is an enemy to each other".

The predetermined relationship may be, for example, "a relationship in which a relationship determined based on an attribute of at least one user is a specific relationship". Herein, examples of the attribute of the user include a rank, a gender, a play duration, a behavior tendency, a character which is used (in other words, owned), or the like. Note that it may be mentioned that the rank represents a proficiency of a user or it may be mentioned that the rank represents a relative positioning between users. The rank includes a status that is so-called a level in a general game or the like. Note that the rank of the user may be a rank of the user themselves or may be a rank or the like of a character used by the user. The character includes an avatar or the like of the user. That is, the predetermined relationship may be, for example, "a relationship in which the rank is higher than that of the first user". The predetermined relationship may be, for example, "a relationship in which genders in the service match (or differ)". The predetermined relationship may be, for example, "a relationship in which a probability of experiencing an annoying action is low (in other words, not a user who performs an annoying action)". Note that as to whether or not the probability of experiencing the annoying action is low, for example, a number of times or the like when network connection is cut during use of content in a past (for example, during a battle or during a quest with another user (herein, another user may be the first user or may be another user including a user other than the first user) may be stored in the storage unit 220 of the server 20 as the user information 223 for each user, and the association unit 216 may determine whether the probability is low based on the number of times or the like. As to whether or not the probability of experiencing the annoying action is low, for example, a number of times or the like when a preset forbidden word (in other words, a monitoring target word) is used in a chat in the service may be stored in the storage unit 220 of the server 20 as the user information 223 for each user, and the association unit 216 may determine whether the probability is low based on the number of times or the like.

Examples of the relationship determined based on the used character as the attribute of the user include following relationships. That is, the predetermined relationship may be, for example, "a relationship in which types of used characters do not overlap (in other words, different characters are used)". The predetermined relationship may be, for example, "a relationship in which in a case where a predetermined group of people (for example, a party) is formed, a balance of the predetermined group of people is improved from a point of view of attributes of characters (in other words, attributes of users)". Specifically, the predetermined relationship may be, for example, "a relationship in which characters with different attributes (in other words, strengths or the like) are used (for example, in a role playing game, an FPS (First Person shooter), or the like, the first user uses a character who is good at attacking, and the second user uses a character who is good at healing"). The predetermined relationship may be, for example, "a relationship in which characters with a common (for example, a same) attribute are used".

In other words, the predetermined relationship (for example, the relationship in which the balance of the predetermined group of people is improved) may be, for example, "a relationship in which an attribute of one user (for example, an attribute such as "good at attacking", "good at healing", an attribute of a character used by a user, or the like) is complemented by an attribute of another user (specifically, for example, a relationship of "good at attacking" and "good at healing" or the like, or in other words, a relationship in which an attribute of one user and an attribute of another user are complementary)". More specifically, the predetermined relationship may be, for example, "a relationship in which an attribute which affects content of a game (in other words, an accomplishment of a predetermined purpose in the game (for example, subjugation of a predetermined enemy character, clear of a predetermined stage, win for a team, or the like) that is an attribute of one user is supplemented by an attribute which affects content of the game that is an attribute of another user".

The predetermined relationship may be, for example, "a relationship in which a predetermined attribute related to one user and a predetermined attribute related to another user are common". Specifically, the predetermined relationship may be, for example, "a relationship in which characters with a common attribute are used". The predetermined relationship may be, for example, "a relationship in which rank bands match". The predetermined relationship may be, for example, "a relationship in which genders match". The predetermined relationship may be, for example, "a relationship in which behavior tendencies are similar". In other words, the predetermined relationship may be, for example, "a relationship in which an attribute which affects content of a game (in other words, an accomplishment of a predetermined purpose in the game (for example, subjugation of a predetermined enemy character, clear of a predetermined stage, win for a team, or the like) that is an attribute of one user and an attribute which affects content of the game that is an attribute of another user are common".

The predetermined relationship may be, for example, "a relationship in which in the content that is being used or has been used together, a relationship determined based on an action performed by at least one user is a specific relationship". Specifically, the predetermined relationship may be, for example, "a relationship in which in the content that is being used together, a beneficial action (in other words, an assisting action) has been performed by the other" or "a relationship in which in the content that is being used together, a beneficial action has been performed for the other". Herein, examples of the beneficial action include, for example, an action to heal a character of the first user in a role playing game, an FPS, or the like, (including, for example, a resurrection action), an action to attack an enemy character which the first user desires to beat (in other words, an assisting attack action), and the like. The predetermined relationship may be, for example, "a relationship in which in the content used together, a network connection is lost (cut by themselves or cut by others)". The predetermined relationship may be, for example, "a relationship in which in the group chat that is participated in together, a comment has been made (specifically, a comment from one side or both sides)" or "a relationship in which in the group chat that is participated in together, mention is mutually added to each other (or one adds mention to another)".

The predetermined relationship may be, for example, "a relationship in which a relationship determined based on a use result of the content used together is a specific relationship". Specifically, the predetermined relationship may be, for example, "a relationship in which in the game played together, a result of win or lose is obtained as a company" or may be "a relationship in which in the game played together, a result of win or lose is obtained as an enemy" or the like. The predetermined relationship may be, for example, "a relationship in which a predetermined performance in the game played together is superior to that of the first user". The predetermined relationship may be, for example, "a relationship in which a win rate is higher (in other words, higher than a predetermined value, where the predetermined value does not need to be a fixed value) in a case where a team is formed in a predetermined situation (for example, in a predetermined stage (in other words, a map) in various types of games) which is determined based on a result obtained by playing the game together a plurality of times".

The predetermined relationship may be, for example, "a relationship in which an intimacy determined based on an action performed by at least one user is high (in other words, which is greater than or equal to a predetermined degree)". Herein, the association unit 216 may determine, for example, a magnitude of intimacy based on a positive behavior performed by one user for another user. Specifically, for example, in a case where the second user has resurrected a character of the first user in the game, since the second user has performed a behavior with a high intimacy (action with a higher intimacy as compared with a case of leaving without the resurrection or the like), the association unit 216 may determine that the intimacy is high (in other words, which is greater than or equal to a predetermined degree). In a case where in a service in which a standard message can be selected from among a plurality of standard messages (for example, standard sentences, so-called stamps, and the like, specifically, such as, for example, "hello", "nice play", and "do our best") to be transmitted to the other party, a specific standard message (for example, "nice play") is transmitted from one side to another side, the association unit 216 may determine that the intimacy is high (in other words, which is greater than or equal to a predetermined degree) since the one side has performed the behavior with a high intimacy. Note that according to a method for the association unit 216 to determine whether or not the intimacy is high, for example, information representing whether or not an action has a high intimacy may be added to each action performed by a user (for example, an action to resurrect a character of another user, an action to transmit a specific standard message, or the like), and the determination may be performed based on the information. According to the method, for example, a configuration or the like may be adopted in which a numerical value related to the intimacy is assigned to each action performed by a user, and also the storage unit 220 stores an accumulative value of the numerical values, so that the association unit 216 increases or decreases the cumulative value based on an action of a user in the service and also determines that the intimacy is high (in other words, which is greater than or equal to a predetermined degree) in a case where the cumulative value becomes greater than or equal to the predetermined value.

The predetermined relationship may be, for example, "a relationship in which a use period of the content used together is greater than or equal to a predetermined period of time". Specifically, the predetermined relationship may be, for example, "a relationship in which in a group chat that is participated in together, a period in which both users participate in the group chat is greater than or equal to a predetermined period of time".

Note that in a case where another user who has a predetermined relationship with the first user in the service is identified as another user automatically registered as a friend, instead of identifying another user who satisfies one relationship exemplified above, the association unit 216 may identify another user who satisfies a plurality of relationships. In other words, for example, a case where "the association unit 216 automatically registers, as a friend, a user whose positional relationship in the service is a specific relationship with the first user" merely represents one of conditions for a user to be automatically registered as a friend, and for example, a configuration or the like may be included in which a user whose relationship determined based on an attribute of at least one user, who is the user, is a specific relationship is automatically registered, and a user whose relationship determined based on an attribute of a user is not a specific relationship is not automatically registered.

The association unit 216 may identify another user who satisfies a condition that is optionally configurable by a user (hereinafter, referred to as "registration condition") as another user to be automatically registered as a friend. In other words, the predetermined relationship may be, for example, "a relationship in which a registration condition set by the first user is satisfied". In other words, the predetermined relationship (whether to automatically register another user having what kind of relationship as a friend) may be optionally configurable by each user. Furthermore, in other words, according to a setting of the registration condition, whether or not another user is automatically registered as a friend may change in a case where each relationship described above is satisfied.

Specifically, the association unit 216 may automatically register, as a friend of the first user, another user who has an attribute (for example, a rank, a gender, a play duration, a behavior tendency, or a character (for example, an attribute of the character) or the like) designated as the registration condition by the first user and who is another user who shares a predetermined experience with the first user, for example.

Note that in this manner, when a user who satisfies the registration condition optionally configurable by the user is automatically registered as a friend, in a case where another user satisfies a registration condition set by one user and the one user satisfies a registration condition set by the another user, the association unit 216 may automatically register the one user and the another user as friends. In other words, in a case where another user who has a predetermined relationship from a viewpoint of the one user is automatically registered as a friend of the one user, the association unit 216 may register both users as friends under a condition that the one user is a user who has a predetermined relationship from a viewpoint of the another user.

Note that in a case where the registration condition can be optionally set by the user, the setting method is not limited in particular, but for example, the following configuration may be adopted. Specifically, each user may set a condition of a user who is desired to be a friend with as the registration condition from their own terminal device 10. In other words, it may be possible to set a whitelist which defines a condition of a user who is desired to be a friend with. A condition of a user who is not desired to be a friend with may be set as the registration condition from their own terminal device 10 by each user. In other words, it may be possible to set a blacklist which defines a condition of a user who is not desired to be a friend with. Furthermore, in other words, the user who satisfies the registration condition may be a user who does not satisfy the condition set as the condition of the user who is not desired to be a friend with.

Note that whether or not a certain user has a predetermined relationship with the first user may change according to an attribute of the first user. Specifically, for example, a configuration or the like may be adopted in which in an FPS, in a case where the first user uses a character who is good at attacking, a user who has a predetermined relationship is a user who uses a character who is good at healing, and in a case where the first user uses a character who is good at healing, a user who has a predetermined relationship is a user who uses a character who is good at attacking.

To establish a predetermined relationship, a condition related to a number of times may exist. Specifically, for example, in a case where the association unit 216 automatically registers, as a friend, another user who shares a predetermined experience with the first user in the service, specifically, another user who has participated in an event of a same category, another user who has participated in the event of the same category N times (herein, N is an integer that is greater than or equal to 1) may be automatically registered as a friend. For example, in a case where the association unit 216 automatically registers, as a friend, another user who uses predetermined content together with the first user, specifically, another user who has participated in a same battle in the game, another user who has participated in the same battle N times (for example, having participated N times in a row) may be automatically registered as a friend. For example, in a case where the association unit 216 automatically registers, as a friend, another user by whom the beneficial action has been performed in the content used together, another user by whom the beneficial action has been performed N times may be automatically registered as a friend. For example, in a case where the association unit 216 automatically registers, as a friend, another user with whom mention is mutually added (or one adds mention to another) in a group chat participated in together, another user who has added mention N times may be automatically registered as a friend. Note that it may be possible for a user to optionally set a condition related to the number of times (specifically, N is set as which number or the like) as the registration condition (specifically, at least part of the registration condition).

Timing at which the association unit 216 automatically registers, as a friend, a user who shares a predetermined experience (for example, using predetermined content together) may be, for example, during the sharing of the predetermined experience, may be after the sharing of the predetermined experience, or may be when it is decided to share the predetermined experience.

That is, for example, in a case where the second user who is using predetermined content together with the first user is automatically registered, the second user who has satisfied a specific condition during use of the content may be automatically registered at timing at which the specific condition is satisfied. The second user who has satisfied the specific condition may be, for example, the second user who has performed an action beneficial to the first user (in other words, who has performed an assisting action) during a game. The second user who has satisfied the specific condition may be, for example, a user who has lost a network connection during a game. A user who has satisfied a specific condition may be, for example, the second user who has made a comment in the group chat who is the second user participating in a same group chat as the first user, the second user who has mutually added mention in the group chat (or one adds mention to another), or the like. The second user who has satisfied the specific condition may be, for example, the second user who has performed an action exemplified herein or the like multiple times (for example, the second user who has performed multiple times an action beneficial to the first user, the second user who has mutually added (or has added) mention multiple times). Note that satisfaction of a specific condition may be satisfaction of a condition under which a predetermined relationship is satisfied, or may be satisfaction of a condition other than the condition under which the predetermined relationship is satisfied.

For example, in a case where the second user who has used predetermined content together with the first user is automatically registered, the second user who has satisfied a specific condition during use of content or the second user who has satisfied a specific condition with regard to a use result of content may be automatically registered at timing at which the use of the content is ended. Note that the second user who has satisfied the specific condition with regard to the use result of the content may be a user who has obtained a result of win or a result of lost as a company or an enemy in a game, for example, or may be a user or the like who has left a predetermined performance who is the user who has obtained the result of win or lost. Note that automatic registration timing may be, for example, during display of a result (in other words, a performance) after the game has ended (for example, a result is displayed on the display unit 18 or the like of the terminal device 10 of the first user) or the like.

For example, in a case where the second user who has used predetermined content together with the first user is automatically registered, the second user who has satisfied a specific condition during use of content, the second user who has satisfied a specific condition with regard to a use result of content, or the second user who has satisfied a specific condition after use of content may be automatically registered at timing at which a predetermined period has passed since end of the use of the content. Specifically, for example, in a case where the second user exists who satisfies a predetermined relationship when a level becomes greater than or equal to 10, if the level of the second user was at level 1 at end timing of a battle performed together but subsequently the level has turned to 10 after elapse of a period of time, the second user may be automatically registered as a friend based on a state in which the level of the second user has turned to 10. In this case, during a period between end of the battle and turning of the level of the second user to 10, the association unit 216 may store the second user as a friend candidate in the storage unit 220 of the server 20 and keep monitoring whether or not the level has turned to 10 (whether a state has been established in which the predetermined relationship is satisfied).

For example, in a case where the second user decided to use predetermined content together with the first user is automatically registered as a friend, for example, the automatic registration may be performed at timing immediately after matching, the automatic registration may be performed at timing at which a game or event to be participated in together starts, or the automatic registration may be performed at timing at which both the first user and the second user have participated in a group chat.

Note that the timing to automatically register as a friend described herein may be read as timing at which a friend registration or follow request described below is performed (in other words, timing at which an acceptance screen described below which is related to the request is displayed).

Note that timing at which the association unit 216 identifies the second user to be automatically registered as a friend of the first user and timing at which the second user is automatically registered as a friend of the first user may be different from each other.

Note that in a case where an upper limit is set for a number of users who can be associated with each user (for example, a number of friends of each user), a configuration may be adopted in which the association unit 216 performs automatic association when, for example, a number of other users associated with the first user is below a predetermined ratio to the upper limit, and the automatic association is not performed when the predetermined ratio is greater than or equal to the predetermined ratio. In other words, a condition for the association unit 216 to automatically associate another user may be relaxed or set to be stricter according to the number of other users who are associated.

Note that herein, the description has been made where the association unit 216 automatically registers the identified second user as a friend of the first user, but the association unit 216 may automatically register the identified second user as a user whom the first user follows. In other words, the association unit 216 may automatically associate the identified second user with the first user. Furthermore, in other words, the association unit 216 may perform processing of associating the identified second user with the first user without intermediation of an operation of instructing the association by the first user. The association unit 216 may automatically perform a friend registration request or a follow request from the first user to the identified second user. In other words, the association unit 216 may automatically perform the request related to the association of the second user with the first user to the identified second user. Furthermore, in other words, the association unit 216 may function as a request unit which performs a request related to the association of the second user with the first user to the identified second user without intermediation of an operation of instructing the request by the first user. Note that when a request related to the association of the second user with the first user (specifically, a friend registration request or a follow request) is made to the second user, for example, in a case where the second user performs a predetermined input operation to accept the request with their own terminal device 10 or the like, the second user is associated with the first user (in other words, a state is established in which the first user and the second user become friends or the first user follows the second user).

Note that whether or not another user is automatically registered as a friend or a following user or whether or not a friend registration or follow request to another user is automatically performed may be configurable by each user from their own terminal device 10.

Note that in the present embodiment, in a case where various types of processing "are performed without intermediation of an operation by a user" or the like, any configuration is sufficient as long as an operation by the user is not needed when the processing is performed, and for example, an advance setting operation or the like by a user may be performed, such as an operation to preset a condition for performing the processing or an operation to enable automatic performance of the processing. Specifically, in a case "a request related to the association of the second user with the first user is performed without intermediation of an operation of instructing the request by the first user", for example, any configuration is sufficient as long as the request is made without an operation or the like of tapping a button to request friend registration in a conventional game or the like, and an advance setting operation or the like to automatically make the request may be performed.

Note that the service of the present embodiment may be a service which does not have either a function of registering another user as a friend or a function of registering another user as a user to follow. In a case where both a function of registering another user as a friend and the function of registering another user as a user to follow are provided, a configuration may be adopted in which with regard to any one of the functions, the registration or the request for the registration is automatically performed, but with regard to another function, the registration or the request for the registration is not automatically performed. A configuration may be adopted in which both a function of registering another user as a friend and the function of registering another user as a user to follow are provided and the registration or the request for the registration is automatically performed with regard to both, but respective conditions for automatic performance or the like may be different from each other.

### Release of association

So far, the automatic registration as a friend, the automatic follow, and the automatic friend registration or follow request with regard to the second user identified by the association unit 216 have been described. In other words, the automatic performance of processing related to association between users with regard to the second user identified by the association unit 216 has been described. Hereinafter, with regard to the second user (that is, a user, hereinafter also referred to as an "associated user", who is a friend or a following user of the first user) associated with the first user based on the processing since the processing related to the association is automatically performed in this manner, an operation of releasing the association with the first user will be described. Note that the associated user may include not only the user who is automatically associated but also, for example, a user who becomes a friend, a following user, or the like after the first user makes a friend registration or follow request from their own terminal device 10 and a user of the other party has accepted the request with their own terminal device 10. In other words, the associated user may include a user who is manually associated (specifically, a user who, after a friend registration or follow request is made based on an input operation of the first user, is associated based on the request). Note that herein, in a case where a friend registration or follow request is made based on the input operation of the first user, the second user may be registered as a friend or a following user of the first user without requiring an acceptance of the second user, or the registration may be performed via an acceptance of the second user. Note that hereinafter, registration as a friend or follow, or making a request for these is automatically performed, and a user who is associated is also referred to as an "automatically associated user".

The storage unit 220 stores a condition related to release of the association between users (hereinafter, referred to as a "release condition"). The release unit 217 identifies, among associated users who are associated with each user, a user who satisfies a release condition as a user whose association is to be released (hereinafter, referred to as a "releasing user"). The release unit 217 releases the association with the identified releasing user.

The release condition may be, for example, "content is not used together for a predetermined period of time (in other words, not played together for a predetermined period of time)". The release condition may be, for example, "an associated user (or the first user) is not logged in (in other words, not using the service) for a predetermined period of time". The release condition may be, for example, "a frequency related to message transmission is low (for example, a number of message transmissions from one side to another side out of the first user and an associated user in a predetermined period of time (or a total number of message transmissions from both sides) is less than or equal to a predetermined number)". The release condition may be, for example, "a rank of an associated user is not changed for a predetermined period of time". The release condition may be, for example, "a chat in the service is disrupted by an associated user". Note that whether or not the chat is disrupted may be determined, for example, based on whether or not a number of times to use a preset forbidden word (in other words, a monitoring target word) is greater than or equal to a predetermined number or may be determined based on whether or not a number of message transmissions from an associated user to the first user is excessive as compared with a number of message transmissions from the first user to the associated user, or the like.

The release condition may be optionally configurable by each user from their own terminal device 10. For example, each release condition described above may be displayed on the display unit 18 of the terminal device 10 as a selection item, and a user may perform an input operation to select a release condition to be applied (or a release condition the application of which is desired to be stopped), so that the release condition can be set.

A configuration may be adopted in which the release condition cannot be optionally changed by a user. In other words, a configuration may be adopted in which at least part of the release condition cannot be optionally changed by a user to and is applied to all users.

In a case where a plurality of conditions are set as the release condition, the release unit 217 may release the association with an associated user who satisfies one condition among the plurality of conditions or may release the association with an associated user who satisfies a plurality (for example, a whole) of conditions.

A configuration may be adopted in which the release condition related to automatic release of an associated user is applied to a user who is automatically associated and is not applied to a user who is manually associated. Herein, a phrase "is applied to a user who is automatically associated and is not applied to a user who is manually associated" includes, for example, (1) a case of a configuration in which automatic release of the association based on the release condition is not performed with regard to a manually associated user on a system, (2) a case of a configuration in which automatic release of the association based on a second release condition different from the release condition related to the automatic release of the automatically associated user is performed with regard to a manually associated user, and the like. Note that the configuration of (2) also includes a configuration in which according to a selection of a user, automatic release of the association is possible based on a same release condition with regard to both a manually associated user and an automatically associated user. According to the configuration described above, a manually associated user having a high chance of desiring to maintain the association who is another user proactively associated by the user is not to be automatically released (or making it harder to release), and an automatically associated user having a lower chance of desiring to maintain the association as compared with a manually associated user can be automatically released.

The release condition may be relaxed or set to be stricter according to a number of associated users who are associated with a user. In other words, the release unit 217 may change the release condition according to the number of associated users who are associated with the user. Specifically, for example, as the number of associated users increases, the release unit 217 may relax the release condition more (in other words, the release is more likely to happen). Herein, relaxing the release condition more as the number of associated users increases may mean that at least two states of a strict state and a relaxed state with regard to the release condition exist while a predetermined number is set as a boundary. Herein, the predetermined number may be a constant number. The predetermined number may be optionally configurable by a user. The predetermined number may fluctuate according to a situation. In a case where, for example, an upper limit number is set for a number of associated users who can be associated with one user, the predetermined number may be a number a ratio of which to this upper limit number is greater than or equal to a predetermined ratio. In other words, the release unit 217 may relax the release condition more, for example, as the number of associated users who are associated with a certain user is closer to the upper limit number (in other words, the release is more likely to happen). Note that the upper limit number may be individually set for automatically associated users and manually associated users or may be a number obtained by combining automatically associated users and manually associated users. Note that a strict release condition state may be a state in which automatic release is not performed. In other words, a configuration may be adopted in which in a case where, for example, a number of associated users who are associated with a certain user has a room for the predetermined upper limit number, the release unit 217 does not perform automatic release of a user who is automatically associated.

Note that relaxing the release condition may mean that, for example, a number of conditions required to automatically release the association with an associated user decreases. Relaxing the release condition may mean that, for example, a parameter related to each release condition changes or the like. For example, in a case where the association with an associated user who satisfies a condition with a rule related to a period of time such as a condition "not using content together for a predetermined period of time" is automatically released, a parameter which sets the period of time may change to shorten the period of time or the like.

As described above, the release unit 217 identifies an associated user who satisfies the release condition as a releasing user and releases the association with the identified releasing user. The release unit 217 automatically performs identification of a releasing user. In other words, when a releasing user whose association with the first user is to be released is identified, the release unit 217 performs identification of the releasing user without intermediation of an operation of instructing the identification by the first user.

The release unit 217 automatically performs release of the association with the identified releasing user. In other words, when the association with the first user of the releasing user is to be released, the release unit 217 releases the association of the releasing user without intermediation of an operation of instructing the release by the first user.

Note that for example, the releasing user identified by the release unit 217 as an associated user whose association with the first user is to be released may be presented to the first user before the association is released. Specifically, for example, when the release unit 217 identifies the releasing user, before the association is released, the identified releasing user may be displayed on the display unit 18 of the terminal device 10 of the first user. Herein, after the releasing user is identified, when the first user uses a service for a first time (in other words, an application is activated) or the like, the identify releasing user may pop up to be displayed on the display unit 18. Releasing users who are identified may be displayed on the display unit 18 in a list. The list is also considered as a list of associated users whose association is planned to be released and is created by the list creation unit 218, for example. Display for urging a selection as to whether or not the association of the releasing user is to be released or the like may be displayed on a screen which presents the releasing user to the first user through pop up display, list display, or the like in this manner, and in a case where an input operation of selecting the release by the first user (in other words, an operation of instructing the release of the association) is performed, the release unit 217 may release the association of the releasing user. In other words, when the association with the first user of the identified releasing user is to be released, the release unit 217 may release the association of the releasing user via an operation of instructing the release by the first user.

In a case where the release unit 217 identifies the releasing user and automatically performs the release of the association with the first user or the like, the releasing user whose association has been released may be displayed on the display unit 18 of the terminal device 10 of the first user. Herein, for example, after the association of the releasing user is released, when the first user uses a service for a first time (in other words, an application is activated) or the like, the releasing user who has been released may pop up to be displayed on the display unit 18. Releasing users whose association has been released may be displayed on the display unit 18 in a list. The list is also considered as a list of associated users whose association has been released and is created by the list creation unit 218, for example. Display for urging a selection as to whether or not the association of the releasing user whose association has been released is to be revived (associated again) or the like may be displayed on a screen which presents the releasing user whose association has been released to the first user through pop up display, list display, or the like in this manner, and in a case where an input operation of selecting the revival (in other words, an operation of instructing the association to be carried out again) by the first user is performed, the release unit 217 may associate the releasing user whose association has been released with the first user again.

Note that a configuration may be adopted in which in a list of releasing users whose association is planned to be released, an expiration is set for a listing period of each releasing user in the list, and also when a predetermined period of time elapses, the association of the releasing user with the first user after the elapse of the predetermined period of time is released, and the display on the list of the releasing user ends. A configuration may be adopted in which in a list of releasing users whose association has been released, an expiration is set for a listing period of each releasing user in a list, and when a predetermined period of time elapses, the display on the list of the releasing user after the elapse of the predetermined period of time ends. In other words, the list creation unit 218 may delete the releasing user after the elapse of the predetermined period of time since their inclusion in these lists from the lists. Note that each of these listing periods may change according to a number of associated users who are associated with a user (for example, a ratio to an upper limit number).

Note that a configuration or the like may be adopted in which a list of releasing users whose association is planned to be released or a list of releasing users whose association has been released is created by the list creation unit 218 and stored in a predetermined storage unit such as the storage unit 220, and is transmitted to the terminal device 10 when display on the display unit 18 is performed.

Note that before the association is released, whether or not the releasing user identified by the release unit 217 as the associated user whose association with the first user is to be released is presented to the first user (whether the release is performed after the presentation is carried out or the release is performed without carrying out the presentation) may be configurable by the first user from their own terminal device 10. Whether or not the releasing user whose association has been released is presented to the first user may be configurable by the first user from their own terminal device 10.

Note that a configuration may be adopted in which with regard to an associated user whose association is not desired to be automatically released by the release unit 217, the associated user can be excluded from a target of automatic release of the association. Specifically, for example, a list of associated users who are associated with the first user may be displayed on the display unit 18 of the terminal device 10 of the first user, and the input unit 17 may accept an input operation (for example, a touch operation or the like) of selecting an associated user desired to be excluded from the target of the release from among the associated users included in the list, so that the release unit 217 may register the selected user as a user to be excluded from the target of the release in the storage unit 220 based on the input operation. With regard to an associated user excluded from the target of the release, even when the associated user is an associated user who satisfies a release condition, the release unit 217 does not automatically perform the identification as a releasing user or automatically release the association. In other words, the associated user management unit 215 may register an associated user designated by the first user among associated users who are associated with the first user as a special associated user who is to be excluded from the target of the release. In this case, as compared with an associated user who is not a special associated user (in other words, an associated user who is not designated from the first user), a further restriction is imposed on the release of the association with regard to the special associated user (for example, the automatic identification as a releasing user or release is not performed, or the like).

### List of associated users

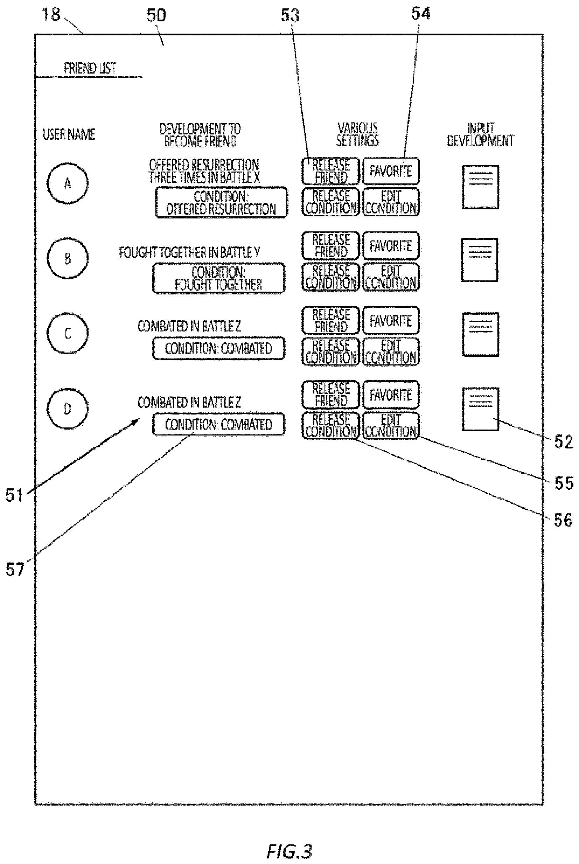

From the terminal device 10 of each user, it is possible to view a list of associated users who are associated to themselves (hereinafter, referred to as an "associated user list"). The display control unit 114 of the terminal device 10 of each user causes the associated user list with regard to the associated users who are associated to themselves to be displayed on the display unit 18. Fig. 3 illustrates an example of an associated user list display screen 50 on which the associated user list is to be displayed.

With regard to each associated user, information (hereinafter, referred to as development information 51) related to a user name and information related to an associated development as information of each associated user, a development information input button 52 to be operated when the development information 51 is input, and various types of buttons for performing setting related to the association are displayed on the associated user list display screen 50 illustrated in Fig. 3. Then, by viewing the associated user list display screen 50 (specifically, the development information 51), it is possible for each user to confirm a development in which each associated user is associated with themselves.

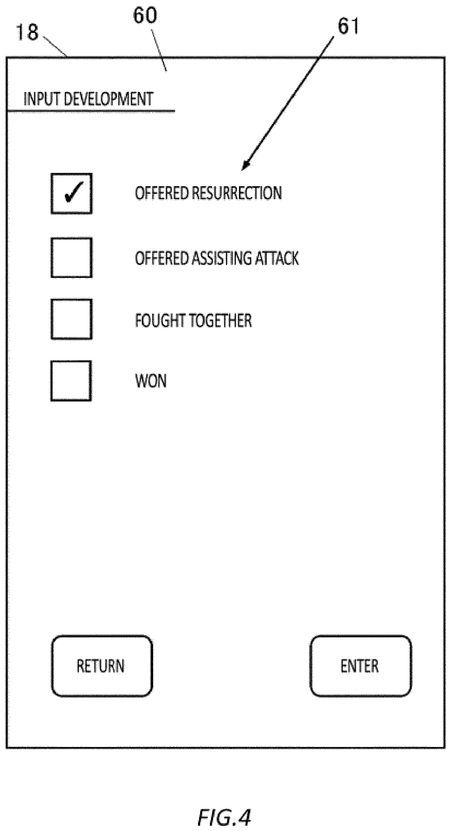

For example, the development information 51 is input as follows. First, in a case where the development information 51 is input with regard to a specific associated user, the first user performs an input operation of selecting the development information input button 52. When the input operation is performed, the display control unit 114 causes the display unit 18 to display a development information input screen 60. Fig. 4 illustrates an example of the development information input screen 60.

For example, a plurality of tags 61 related to a development of the association is displayed on the development information input screen 60. The development information management unit 219 stores a tag 61 selected by an input operation of the first user from among the plurality of tags 61 displayed on the development information input screen 60 in the storage unit 220 as the development information 51 of the specific associated user while being attached to the specific associated user. Note that it may be possible to attach a plurality of tags 61 to a single associated user.

Herein, for example, the tag 61 may be related to an incident (for example, related to a behavior of the first user or the specific associated user or related to a performance of the first user or the specific associated user, or the like) in an experience (for example, a battle played together which serves as a trigger to associate both users) which has been shared by the first user and the specific associated user, may be related to a relationship between the first user and the specific associated user, or the like. The tag 61 may be related to a phenomenon which becomes a cause of automatically associating an associated user, for example. Specifically, the tag 61 may be, for example, "received healing", "offered healing", received assisting attack", "offered assisting attack", "received item (including a case, for example, where a consumable item has been kindly used", "offered item", "skillful (in other words, good performance)", "unskillful (in other words, bad performance)", "fought together", "combated", "won", "lost", "participated in specific live together", "had round-trip conversations greater than or equal to what number in chat", or the like.

Note that on the development information input screen 60, an assist related to a selection of a tag 61 related to an actual incident in an experience shared by the first user and the specific associated user may be provided. Specifically, for example, the tag 61 related to the actual incident may be preferentially displayed on the development information input screen 60. A term "preferentially" herein means, for example, that only the tag 61 related to the actual incident may be displayed or that a priority in terms of display of the tag 61 related to the actual incident may be high (for example, the tag 61 related to the actual incident is displayed on an upper side or the like). For example, when display of the development information input screen 60 is started, the display may be started in a state in which the tag 61 related to the actual incident is selected (for example, a state in which a tick mark is attached in an example illustrated in Fig. 4).

Note that for example, the development information input screen 60 may be displayed on the display unit 18 of the terminal device 10 of the first user (and the second user) or the like at timing at which the second user is automatically associated with the first user (timing of automatic registration as a friend, timing of automatic following, or timing at which the second user has accepted an automatic friend registration or follow request). For example, when a battle in which it is decided to automatically associate the second user with the first user ends (for example, during display of a result), the development information input screen 60 may be displayed on the display unit 18 of the terminal device 10 of the first user (and the second user) or the like. In other words, when the second user is automatically associated with the first user, the development information management unit 219 may transmit, to the terminal device 10, information for displaying the development information input screen 60 as display for urging an input of the development information 51, and the display control unit 114 may cause the development information input screen 60 to be displayed on the display unit 18 based on the information or the like. A configuration may be adopted in which when the input of the development information 51 is to be urged by displaying the development information input screen 60 at predetermined timing or the like in this manner, in a case where the second user is automatically associated with the first user, display for urging the input of the development information 51 is performed in the terminal device 10 of the first user (and the second user), and on the other hand, in a case where the second user is manually associated with the first user, display for urging the input of the development information 51 is not performed in the terminal device 10 of the first user (and the second user) (in other words, the development information management unit 219 does not transmit information for displaying the development information input screen 60 to the terminal device 10).

Note that it may be possible to perform tag attachment to the second user during sharing of an experience (for example, in a middle of a battle played together which serves as a trigger to associate both users). Specifically, in a state in which the first user and the second user play a game together, in a case where the second user has resurrected a character of the first user or the like, the first user can perform an input operation of attaching a tag 61 "offered resurrection" to the second user with their own terminal device 10 (for example, the tag 61 is displayed on the display unit 18, and an input operation of selecting this can be carried out), and based on the input operation, the association unit 216 may attach the tag 61 to the second user as the development information 51 of the second user to be stored in the storage unit 220 or the like. Note that in this case, it may be possible to attach the tag 61 to the second user before it is decided to associate the second user with the first user during sharing of the experience. The association unit 216 may associate the second user with the first user based on the attachment of the tag 61 (in other words, registration as a friend, follow, or making a request for these).

Note that herein, the development information 51 is input on the development information input screen 60 based on the selection of the tag 61, but the development information 51 may be input through a text input on the development information input screen 60.

The development information 51 may be automatically input without intermediation of an operation of a user, for example. For example, a phenomenon which is a cause to automatically associate an associated user may be automatically input as the development information 51. Specifically, for example, in a case where the second user is automatically registered as an associated user of the first user based on a state in which the second user has performed an action to heal (specifically, an action to resurrect) a character of the first user three times in a certain battle X in a game, the development information management unit 219 may automatically (in other words, without intermediation of an operation of the first user) attach the development information 51 "offered resurrection three times in battle X" to the second user to be stored as information related to the associated user in the storage unit 220 or the like. In other words, for example, an incident at a time of a play (for example, a battle or the like) which serves as a trigger to automatically associate the second user, a relationship between the first user and the second user, or the like may be automatically input as the development information 51. The development information 51 automatically stored in the storage unit 220 may be editable based on an input operation with the terminal device 10 of the user. In this case, for example, the development information management unit 219 edits the development information 51 based on the input operation.

In a case where the development information input screen 60 is to be displayed at predetermined timing, the development information input screen may be displayed in a state in which the development information 51 is automatically input, and also on the development information input screen 60, an input operation of editing the development information 51 automatically input by the user may be accepted. The input operation may be, for example, a text input operation of editing the automatically input development information 51 or may be an input operation of deleting an automatically attached tag 61 (including, for example, a case where a tick mark is automatically attached in the example illustrated in Fig. 4 or the like) or adding another tag 61.

Various types of buttons for performing setting related to the association which are displayed on the associated user list display screen 50 include, for example, a release button 53 operated when the association of an associated user is released, a favorite button 54 operated when an associated user is registered as a favorite, a condition edit button 55 operated when a registration condition of an associated user is edited, a condition release button 56 operated when a setting of a condition is released, and a condition setting object 57 operated when a registration condition is set based on the development information 51.

When an input operation is performed on the release button 53, the release unit 217 releases the association of a target associated user. That is, when a user operates the release button 53, it is possible to manually release the association with the associated user. Note that when the release button 53 is operated, the display control unit 114 may cause a confirmation screen for confirming whether the association may be actually released or the like to be displayed on the display unit 18.

When an input operation is performed on the favorite button 54, the associated user management unit 215 registers a target associated user (in other words, an associated user related to the operated favorite button 54) as a favorite. With regard to an associated user registered as a favorite, for example, even in a case where the associated user satisfies a release condition, the automatic identification as a releasing user or the automatic release of the association is not performed. With regard to an associated user registered as a favorite, for example, in a case where the association is to be released based on an operation on the release button 53 or the like, as compared with an associated user who is not registered as a favorite, a number of procedures required to release (for example, a number of times to confirm whether the release may be performed or the like) may increase. In other words, the associated user management unit 215 registers an associated user designated by the first user among associated users who are associated with the first user as a special associated user (in other words, a favorite). Then, herein, as compared with an associated user who is not a special associated user (in other words, an associated user who is not designated from the first user), a further restriction may be imposed on the release of the association with regard to the special associated user (for example, the automatic identification as the releasing user or release is not performed, or a number of procedures to be performed by the first user is high when the release is to be performed, or the like).

Note that a configuration may be adopted in which the registration of an associated user as a favorite is not based on an operation on the favorite button 54. For example, the associated user management unit 215 may automatically register, as a favorite, an associated user whose development information 51 is input by an input operation by a user (for example, an input through a text input, an input through a selection of a tag 61, or the like).

When an input operation is performed on the condition edit button 55, the display control unit 114 causes an edit screen (not illustrated) for editing a registration condition to be displayed on the display unit 18. When a registration condition is edited (in other words, set) on the edit screen, the association unit 216 automatically associates a user who satisfies the registration condition after the editing. In other words, according to the present embodiment, by editing the registration condition on the edit screen, it is possible to change a condition of a user to be automatically associated. Furthermore, in other words, according to the present embodiment, the registration condition of an associated user is editable based on an input operation on the condition edit button 55.

On the edit screen, for example, it may be possible to set a detailed condition of a registration condition corresponding to the development information 51 of a target associated user. Specifically, in a case where the condition edit button 55 is operated which is related to the associated user to which the development information 51 "offered resurrection three times in battle X", that is, the development information 51 "offered resurrection" is attached, it is configurable to set on an edit screen how many times the resurrection needs to be offered to automatically register a user who has offered the resurrection action as an associated user as a detailed condition with regard to the registration condition "offered resurrection". In other words, an input operation related to a setting of the detailed condition may be accepted on the edit screen.

For example, it may be possible to set a registration condition which is not related to the development information 51 of the target associated user on the edit screen. Specifically, in a case where the condition edit button 55 related to the associated user to which the development information 51 "offered resurrection" is operated, it may be configurable to set a registration condition "offered item", a registration condition "fought together", or the like instead of, or in addition to, the registration condition "offered resurrection" on the edit screen.

In addition, according to the present embodiment, when an input operation is performed on the condition setting object 57, the association unit 216 sets a condition (that is, a registration condition) to be satisfied by another user to automatically associate in a future based on the development information 51 of the target associated user. Specifically, a registration condition extracted based on the development information 51 of each associated user is displayed as the condition setting object 57 on the associated user list display screen 50. More specifically, for example, in a case where development information 51 "offered resurrection three times in battle X" is attached to an associated user, the condition setting object 57 related to the registration condition "offered resurrection" is displayed on the associated user list display screen 50 as a registration condition extracted based on the development information 51. Then, when an input operation on the condition setting object 57 by user is performed, the association unit 216 sets (in other words, enables) a registration condition "offered resurrection" so as to automatically associate another user who has offered resurrection in a future. That is, according to the present embodiment, a registration condition associated with the development information 51 is displayed on the associated user list display screen 50 as a candidate of a registration condition to be set (in other words, enabled), and a setting of the registration condition is proposed to a user. Note that the display of the condition setting object 57 can be achieved as follows, for example. That is, a configuration may be adopted in which a table representing a corresponding relationship between a keyword (for example, "resurrection" or the like in the example described above) which may be included in the development information 51 and a registration condition is stored in the storage unit 220, and in a case where a specific keyword is included in the development information 51, the associated user management unit 215 extracts a registration condition corresponding to the specific keyword, and also information for causing the condition setting object 57 related to the extract registration condition to be displayed on the display unit 18 is transmitted to the terminal device 10.

The condition release button 56 is a button to be operated when a setting of the registration condition displayed as the condition setting object 57 is released (in other words, disabled). When an input operation is performed on the condition release button 56, the association unit 216 excludes a registration condition related to the condition setting object 57 of a target associated user from a condition that is to be satisfied by another user to automatically associate in a future. In other words, when an input operation is performed on the condition release button 56, the association unit 216 excludes a registration condition extracted based on the development information 51 of a target associated user from a condition that is to be satisfied by another user to automatically associate in a future. Note that when an input operation is performed on the condition release button 56, the association unit 216 may exclude a registration condition which has been satisfied by the associated user when a target associated user is automatically associated from a condition that is to be satisfied by another user to automatically associate in a future. Note that when an input operation on the condition release button 56 is performed to release the setting of the registration condition, the condition release button 56 may change into a condition setting button (not illustrated), and when an input operation on the condition setting button is performed, the registration condition that has been released (in other words, disabled) based on the input operation on the condition release button 56 may be set (in other words, enabled) again. In other words, the condition setting object 57 may be an object which simply displays a predetermined registration condition instead of an object which accepts an operation of setting (in other words, enabling) a registration condition.

Note that information required to display the associated user list such as the development information 51 is stored in the storage unit 220 of the server 20, for example, and transmitted from the associated user management unit 215 to the terminal device 10 when display of the associated user list is performed (for example, based on a request from the terminal device 10 to the server 20 based on a predetermined input operation on the operation acceptance unit 111). Note that the information required to display the associated user list may be stored in the storage unit 120.

### Classification list

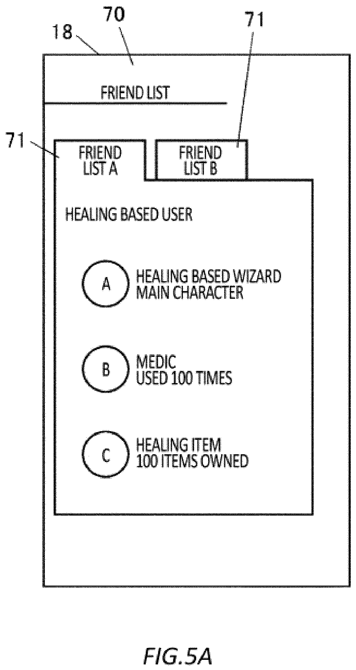

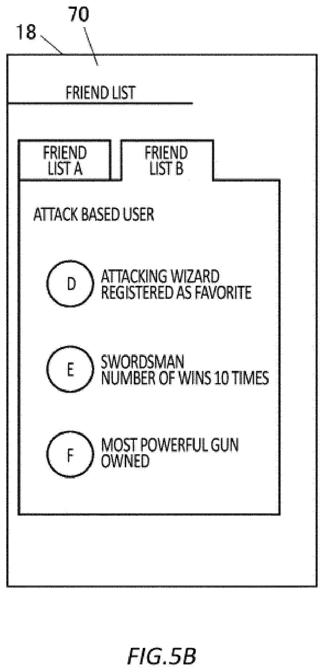

The list creation unit 218 creates a plurality of lists (hereinafter, referred to as "classification lists") in which a plurality of associated users who are associated with a user are classified according to an attribute of the associated user. The display control unit 114 of the terminal device 10 of each user causes the display unit 18 to display a classification list with regard to an associated user who is associated with themselves. Figs. 5A and 5B illustrate an example of a classification list display screen 70 on which a classification list is displayed.

The list creation unit 218 may create, for example, a plurality of classification lists in which an associated user who is associated with the first user is classified according to a compatibility with the first user. Note that one associated user may be assigned to a plurality of classification lists. A configuration may be adopted in which one associated user is not assigned to a plurality of classification lists (in other words, not included in an overlapping manner). A configuration may be adopted in which each associated user is certainly assigned to any of classification lists, and an associated user who is not assigned to any of classification lists does not exist. An associated user who is not assigned to any of classification lists may exist.

Specifically, for example, in a case where a predetermined game (specifically a role playing game, an FPS, or the like) is assumed, the list creation unit 218 may create, as classification lists in which associated users are classified according to a compatibility with the first user, a classification list in which associated users having an attribute "good at healing" are grouped (see Fig. 5A) and a classification list in which associated users having an attribute "good at attacking" are grouped (see Fig. 5B). Herein, whether being good at healing or being good at attacking may be determined, for example, based on an attribute (for example, an occupation) of a character used by each associated user or may be determined based on an item or the like owned by each associated user. For example, an associated user using a character whose occupation is a "healing based wizard", a "medic", or the like may be included in a classification list of associated users who are good at healing. For example, an associated user using a character whose occupation is an "attack based wizard", a "swordsman", or the like may be included in a classification list of associated users who are good at attacking. Herein, a character to be used may be, for example, a character most frequently used (in other words, often) by the user, may be a character that is set as a character to be mainly used in a game or the like in which a character to be mainly used is selectable by each user, may be a character that is registered as a favorite in a game or the like in which a frequently used character can be registered as a favorite by each user, may be a character whose number of use times exceeds a predetermined number, may be a character whose number of wins exceeds a predetermined number when the character is used, or the like. For example, an associated user whose number of owned healing items is greater than or equal to a predetermined number may be included in a classification list of associated users who are good at healing. For example, an associated user who owns a weapon with a high attacking ability such as a most powerful gun in a game as compared with weapons owned by other users (in other words, other weapons existing in a game) may be included in a classification list of associated users who are good at attacking.

In other words, the list creation unit 218 may create a classification list in which an associated user is classified according to an attribute of the character used by the associated user as a classification list in which an associated user is classified according to a compatibility with the first user. The list creation unit 218 may create, for example, a classification list classified based on an occupation of the character as described above or may create a classification list classified based on a rank or the like of the character. The list creation unit 218 may create, for example, a classification list or the like in which associated users who use characters which are not overlapped with a character used by a user are grouped. The classification list or the like classified according to the attribute of the character as described above facilitates a search for an associated user who is easy to play together for the first user (for example, an associated user having a character with an attribute which is easy to play together for the first user, an associated user in a rank band which is easy to play together for the first user, or the like) and for an associated user who is not easy to play together, and may be regarded as a classification list classified according to a compatibility with the first user.

The list creation unit 218 may create, as a classification list in which an associated user is classified according to a compatibility with the first user, a classification list according to a compatibility with the first user which is determined based on a play history in a past of the first user and each associated user. Specifically, for example, in a case where a predetermined game (specifically, a game to aim an accomplishment of a predetermined purpose (for example, a competitive game) or the like) is assumed, the list creation unit 218 may create a classification list in which an associated user is classified according to a number of times to accomplish the predetermined purpose or a probability (in other words, a win rate in a competitive game or the like) when an associated user and the first user have played together in a past (herein, a term "together" may mean any of a case of playing as a company and a case of playing as an enemy. The list creation unit 218 may create, for example, a classification list in which an associated user is classified according to a number of times to give a high rating reaction from one to another between the first user and associated user (for example, a number of so-called "likes" or the like). The list creation unit 218 may create, for example, a classification list in which an associated user is classified according to a number of times to perform a beneficial action from one to another between the first user and associated user.

The list creation unit 218 may create, for example, a classification list in which an associated user is classified according to a compatibility for each stage as a classification list in which an associated user is classified according to a compatibility with the first user. Specifically, for example, in a case where a plurality of stages including a first stage and a second stage in an FPS (in other words, maps) are prepared, the list creation unit 218 may create a classification list in which associated users having a good compatibility with the first stage are grouped and a classification list in which associated users having a good compatibility with the second stage are grouped. Herein, a compatibility with each stage of each associated user may be determined based on, for example, a win rate in past combats in each stage of each associated user (for example, when the win rate is greater than or equal to 70%, the compatibility is good or the like), a number of wins (for example, when a cumulative number of wins is 100, the compatibility is good or the like), or whether or not an excellent performance has been attained in a previous battle (for example, in case of winning the battle, the compatibility is good or the like).

The list creation unit 218 may create, for example, a plurality of classification lists in which an associated user who is associated with the first user is classified according to a frequency to play together. Specifically, the list creation unit 218 may create, for example, a plurality of classification lists in which an associated user is classified according to a number of times to play together in a predetermined period of time.

The list creation unit 218 may create, for example, a plurality of classification lists in which an associated user who is associated with the first user is classified according to the development information 51 attached to the associated user. Specifically, the list creation unit 218 may create, for example, a plurality of classification lists in which an associated user is classified based on the tag 61 attached to the associated user.

The list creation unit 218 may create, for example, a plurality of classification lists in which an associated user who is associated with the first user is classified according to an attribute based on an action of the associated user in the service. Specifically, the list creation unit 218 may create, for example, a plurality of classification lists in which an associated user who is associated with the first user is classified according to an attribute based on an action of the associated user in content (for example, a game) used together with the first user. Note that the attribute based on the action includes an attribute related to a result of the action. Specifically, the list creation unit 218 may create, for example, a plurality of classification lists in which an associated user is classified according to a type of an action performed by the associated user (for example, healing the first user, offering an assisting attack, offering an item, or beating an enemy character), a number of times to perform a specific action, a number of times to attain (in other words, accomplish) a specific result as a result of the action (for example, winning a battle or the like), a type of the attained result, a probability of attaining a specific result (for example, a win rate or the like), and the like. The list creation unit 218 may create a plurality of classification lists in which an associated user who is associated with the first user is classified according to an attribute based on an action beneficial to the first user that is an action of the associated user in the service. Specifically, the list creation unit 218 may create, for example, a plurality of classification lists in which an associated user is classified according to a type of an action beneficial to the first user which has been performed by an associated user, a number of times to perform a specific beneficial action, a number of times to attain a specific result as a result of a beneficial action, a type of a result attained from the beneficial action, and the like.

A plurality of classification lists created by the list creation unit 218 are stored in the storage unit 220 of the server 20 which serves as a classification list storage unit. Each of the classification lists stored in the storage unit 220 can be presented to the first user at predetermined timing (can be displayed on the terminal device 10 of the first user at predetermined timing).

Note that a condition of an associated user to be included in each classification list may be configurable from their own terminal device 10 by each user. In other words, how associated users are to be classified and what classification lists are to be created may be configurable from their own terminal device 10 by each user.

As described above, the association unit 216 automatically associates, with the first user, another user who shares a predetermined experience with the first user, but the list creation unit 218 may automatically sort an associated user who is automatically associated in this manner into a classification list according to an attribute of the associated user. How such an associated user who has been automatically associated is to be sorted into which classification list may be manually selectable from their own terminal device 10 by each user.

The association unit 216 automatically associates, with the first user, another user having a predetermined relationship with the first user in the service who is another user who shares a predetermined experience with the first user, but herein, the predetermined relationship may be "a relationship relevant to any classification list". That is, for example, in a case where a classification list of associated users having a good compatibility with a first stage in an FPS is prepared as a classification list of the first user or the like, among users who have participated in a same battle as the first user, a user having a good compatibility with the first stage may be automatically registered as a friend or the like of the first user. In other words, in a case where a plurality of classifications as friend classifications are stored in the storage unit 220, the association unit 216 may automatically associate a user relevant to any of the plurality of classifications.

Note that the list creation unit 218 creates a plurality of classification lists to be stored in the storage unit 220, but a configuration may be adopted in which the plurality of classification lists are not obtained by classifying a plurality of associated users according to an attribute of the associated user. For example, the list creation unit 218 may create a classification list in which a plurality of associated users who are associated with the first user are simply classified into a plurality of lists. Which associated user is to be included in each classification list may be selectable with their own terminal device 10 by the first user. In other words, the list creation unit 218 may decide an associated user to be included in each classification list based on an operation of a user. Furthermore, in other words, it may be possible to store a plurality of classification lists created based on an operation of a user in the storage unit 220.

Display of a classification list on the display unit 18 may be performed as follows, for example. That is, for example, as illustrated in Figs. 5A and 5B, an object (for example, a tab 71) which accepts an operation of selecting a classification list to be displayed from among a plurality of classification lists may be displayed on the classification list display screen 70 which displays a classification list displayed on the display unit 18. Then, the display control unit 114 may cause a classification list selected by an input operation on the object by the user to be displayed on the display unit 18. Note that information of a classification list which is required to display the classification list may be transmitted, for example, upon start of display of the classification list display screen 70 or the like, from the server 20 to the terminal device 10 based on a request from the terminal device 10 or may be transmitted from the server 20 to the terminal device 10 after a request is made from the terminal device 10 to the server 20 based on an input operation of a user for selecting a classification list to be displayed. Note that a plurality of classification lists may be stored in the storage unit 120 of the terminal device 10, and the display control unit 114 may cause the display unit 18 to display a classification list stored in the storage unit 120. The control unit 110 of the terminal device 10 may include the list creation unit 218.

Note that as described above, according to the present embodiment, the list creation unit 218 stores a plurality of classification lists in the storage unit, and each classification list among the plurality of classification lists stored in the storage unit is displayed on the terminal device 10. That is, a configuration according to the present embodiment is different from merely displaying a result obtained by narrowing down a plurality of associated users who are associated with a user based on a predetermined search condition input by the user or from merely displaying a result obtained by rearranging the plurality of associated user based on a predetermined condition input by the user, but is a configuration in which a plurality of classification lists are previously created and stored at a time instant before a list of associated user is displayed.

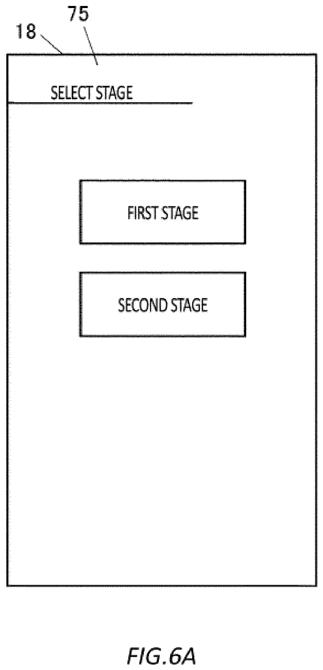

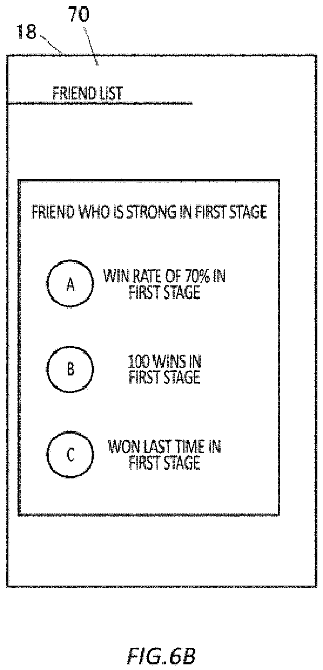

In a case where the display unit 18 is caused to display a classification list, the display control unit 114 may preferentially display a classification list appropriate to a predetermined situation in the service which is determined based on a selection of the user. Note that a term "preferentially" may mean that only a classification list appropriate to a predetermined situation is displayed or may mean a classification list appropriate to a predetermined situation with a high priority in terms of display (for example, a classification list appropriate to a predetermined situation is displayed first, and another classification list is displayed based on an input operation (for example, an operation of selecting the tab described above) of changing a classification list to be displayed, or a classification list appropriate to a predetermined situation is displayed to be larger than another classification list, or the like). Herein, as a specific example, as illustrated in Fig. 6A, a case will be described as an example in which a stage selection screen 75 on which various types of stages (in other words, maps) such as a first stage and a second stage in an FPS can be selected is displayed on the display unit 18. Note that the stage selection screen 75 may be, by selecting a stage, for example, a screen on which a combat in the stage starts or may be, by selecting a stage, a screen on which information with regard to the stage can be confirmed. In a case where an input operation of selecting a first stage is performed on the stage selection screen 75, as illustrated in Fig. 6B, the display control unit 114 causes the display unit 18 to display the classification list display screen 70 on which a classification list of associated users having a good compatibility with the first stage is displayed. On the other hand, in a case where an input operation of selecting the second stage is performed on the stage selection screen 75, the display control unit 114 causes the display unit 18 to display the classification list display screen 70 on which a classification list of associated users having a good compatibility with the second stage is displayed. That is, the display control unit 114 causes the display unit 18 to display a classification list of associated users having an attribute appropriate to a predetermined situation (in other words, a stage in which a user is willing to play) which is determined based on a selection of the user from among a plurality of classification lists. Note that as described above, by selecting a stage, the stage selection screen 75 may be a screen on which a combat in the stage starts. Then, for example, when an input operation of selecting a stage is performed and an operation of selecting one or more associated users from displayed classification lists is performed on the stage selection screen 75, an invitation related to participation in a play is sent from the terminal device 10 of the selected user via the server 20 to the terminal device 10 of the selected associated user, and when the associated user performs an operation of accepting the invitation, a play in which both users participate in the stage may be started.

Note that a situation determined based on a selection of a user may be an event or the like in which a user is willing to participate, for example. For example, in a case where an input operation of selecting a live in which a user is willing to participate is performed, the display control unit 114 may preferentially display a classification list of associated users having an attribute appropriate to participate together in the live (for example, a classification list of associated users determined to have a high chance of being interested in the live from a history of a participated event or the like).

Note that a situation determined based on a selection of a user may be related to an attribute or the like of the user, for example. Specifically, for example, in a case where a character who is good at healing as a character to be used by a user is selected in a role playing game, when the user performs a predetermined input operation of displaying a list of associated users, the display control unit 114 may preferentially display, as a classification list of associated users having an attribute appropriate to a situation in which the play is carried out with a character who is good at healing, a classification list of associated users who use a character who is good at attacking (in other words, a classification list of associated users having an attribute which supplements the attribute of the user).

Note that herein, the description has been provided where the list creation unit 218 previously creates and stores a plurality of classification lists in a storage unit, and when the display unit 18 is caused to display a classification list, the display control unit 114 causes a classification list selected from among the plurality classification lists to be displayed. Note however that the list creation unit 218 may create a classification list when display on the display unit 18 is performed. Specifically, for example, on the stage selection screen 75 illustrated in Fig. 6A, in a case where an input operation of selecting a first stage is performed, the list creation unit 218 may create a classification list of associated users having a good compatibility with the first stage (in other words, a list of associated users having an attribute appropriate to a situation determined based on a selection of a user), and the display control unit 114 may cause the display unit 18 to display the classification list or the like.

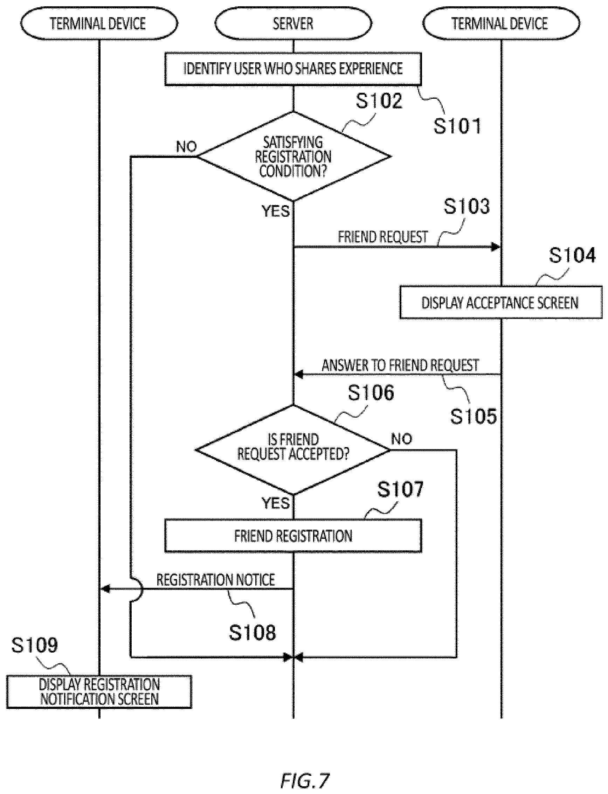

Next, with reference to Fig. 7 to Fig. 11, a flow of processing performed by the system 1 will be described. Note that herein, a case will be described as an example in which the system 1 according to the present embodiment is adopted as a game (specifically, an FPS).

### Processing related to association

Processing of automatically associating the second user with the first user as a predetermined user who uses the system 1 will be described with reference to Fig. 7.

First, the association unit 216 of the server 20 identifies a user who shares an experience with the first user (step S101). Specifically, the association unit 216 identifies a user who participates in a same battle as the first user, for example.

Subsequently, the association unit 216 determines whether or not a user who satisfies a registration condition to be automatically associated with the first user exists among users who participate in a same battle as the first user (step S102). Herein, the registration condition is previously input from their own terminal device 10 by the first user and stored in the storage unit 220 of the server 20 which serves as a registration condition storage unit. Herein, the registration condition which has been input and set by the first user is set as "offered resurrection three or more times during one battle".

In a case where a user who satisfies the registration condition does not exist among users who participate in the same battle as the first user (step S102: NO), the association unit 216 does not perform processing of automatically associating another user with the first user. Specifically, in a case where the second user who is a user who has resurrected the first user three or more times until one battle ends does not exist, the association unit 216 does not perform processing of automatically associating another user with the first user.

On the other hand, in a case where a user who satisfies the registration condition exists among users who participate in the same battle as the first user (step S102: YES), the association unit 216 automatically performs predetermined processing to associate another user with the first user. Specifically, in a case where the second user who is a user who has resurrected the first user three or more times until one battle ends exists (step S102: YES), the association unit 216 performs a friend registration request from the first user to the second user (step S103). At this time, the association unit 216 automatically performs the request without requiring an input operation by the first user. Specifically, the association unit 216 transmits data related to the friend registration request to the terminal device 10 of the second user (step S103). When the transmission and reception unit 112 of the terminal device 10 of the second user receives the data, the display control unit 114 of the terminal device 10 of the second user causes the display unit 18 to display a screen (hereinafter, referred to as an "acceptance screen") for urging an answer to the friend registration request from the first user (step S104). Display to confirm with the second user on whether or not the friend registration request from the first user is to be accepted is carried out on the acceptance screen. In other words, during the display of the acceptance screen, the operation acceptance unit 111 of the terminal device 10 of the second user accepts an operation of accepting and an operation of rejecting the friend registration request as an operation related to an answer to the friend registration request.

When the operation of accepting or the operation of rejecting the friend registration request is accepted in the terminal device 10 of the second user, data representing whether or not the friend registration request is accepted (in other words, an answer to the friend registration request) is sent to the association unit 216 from the transmission and reception unit 112 of the terminal device 10 (step S105).

When data representing whether or not the friend registration request is to be accepted which is sent from the terminal device 10 of the second user is received, the association unit 216 determines whether or not the friend registration request is accepted based on the data (step S106). That is, in a case where the second user has performed the operation of accepting the friend registration request, it is determined that the friend registration request has been accepted (step S106: YES). On the other hand, in a case where the second user has performed the operation of rejecting the friend registration request, it is determined that the friend registration request has been rejected (step S106: NO). In a case where it is determined that the friend registration request has been rejected (step S106: NO), the association unit 216 does not associate the second user with the first user.

In a case where it is determined that the friend registration request has been accepted (step S106: YES), the association unit 216 mutually associates the first user and the second user (step S107). In other words, in a case where it is determined that the friend registration request has been accepted, the association unit 216 registers the second user as a friend of the first user. Furthermore, in other words, in a case where it is determined that the friend registration request has been accepted, the association unit 216 causes the storage unit 220 to store information representing that the second user is a friend of the first user.

When the first user and the second user are mutually associated, the association unit 216 transmits, to the terminal device 10 of the first user, data representing that the second user has been registered as a friend of the first user (step S108). In other words, the server 20 informs the terminal device 10 of the first user that the second user has been registered as a friend of the first user. When the transmission and reception unit 112 of the terminal device 10 of the first user receives the data, the display control unit 114 of the terminal device 10 of the first user causes the display unit 18 to display a registration notification screen for the first user to notify that the second user has been registered as a friend of the first user (step S109).

Note that in the terminal device 10 of the second user, it may be possible to preset whether or not, in a case where a friend registration request from another user has been made, the request is to be received (in other words, whether or not an acceptance screen is to be displayed). In a case where a setting is made to reject reception of the request, the association unit 216 may determine that the friend registration request has been rejected (step S106: NO). For example, in the terminal device 10 of the second user, it may be possible to make a setting of a whitelist which defines a condition of a user who is desired to be a friend with, a setting of a blacklist which defines a condition of a user who is not desired to be a friend with, or the like. Then, a request from a user who satisfies a condition set in the whitelist may be received. Reception of a request from a user who satisfies a condition set in the blacklist may be rejected.

Note that herein, the description has been provided where the association unit 216 performs a friend registration request in a case where a registration condition is satisfied, but instead of the friend request, a follow request may be made. For example, in a case where the registration condition is satisfied, friend registration or follow may be automatically performed without making a request. In other words, a configuration or the like may be adopted in which, for example, in a case of YES in step S102, the processing in step S107 is performed without intermediation of processing in step S103 to step S106.

### Processing related to release of association

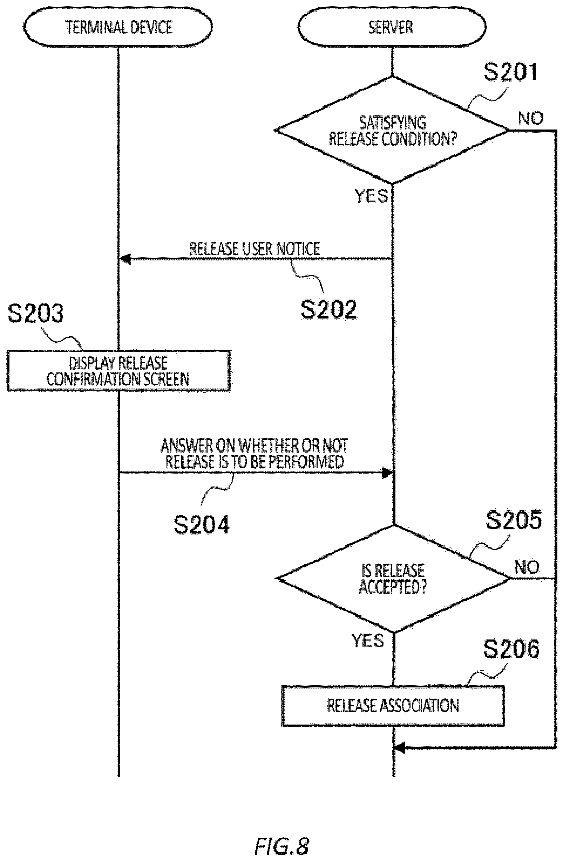

Next, processing of automatically releasing association with the first user with regard to an associated user who is associated with the first user will be described with reference to Fig. 8.

First, the release unit 217 of the server 20 determines whether or not an associated user who satisfies a release condition exists among associated users who are associated with the first user (step S201). Herein, the release condition is previously input from their own terminal device 10 by the first user and stored in the storage unit 220 of the server 20 which serves as a release condition storage unit.

In a case where an associated user who satisfies the release condition exists (step S201: YES), the release unit 217 identifies the associated user as a releasing user and transmits data informing of the identified releasing user to the terminal device 10 of the first user (step S202). When the transmission and reception unit 112 of the terminal device 10 of the first user receives the data, the display control unit 114 of the terminal device 10 of the first user causes the display unit 18 to display a release confirmation screen for urging an answer as to whether or not the association with the releasing user is to be released (step S203). During the display of the release confirmation screen, the operation acceptance unit 111 of the terminal device 10 of the first user accepts an operation of accepting and an operation of rejecting the release of the association with the releasing user.

In the terminal device 10 of the first user, when the operation of accepting or the operation of rejecting the release of the association with the releasing user is accepted, data representing whether or not the release of the association with the releasing user is to be accepted (in other words, an answer on the release of the association with the releasing user) is sent from the transmission and reception unit 112 of the terminal device 10 to the release unit 217 (step S204).

When data representing whether or not the release of the association with the releasing user is to be accepted which is sent from the terminal device 10 of the first user is received, the release unit 217 determines whether or not the release of the association with the releasing user has been accepted based on the data (step S205). That is, in a case where the first user has performed the operation of accepting the release, it is determined that the release of the association with the releasing user has been accepted (step S205: YES). On the other hand, in a case where the first user has performed the operation of rejecting the release, it is determined that the release of the association with the releasing user has been rejected (step S205: NO). In a case where it is determined that the release has been rejected (step S205: NO), the release unit 217 does not release the association with the first user of the releasing user.

In a case where it is determined that the release of the association with the releasing user has been accepted (step S205: YES), the release unit 217 releases the association with the first user of the releasing user (step S206).

### Processing related to input of development information

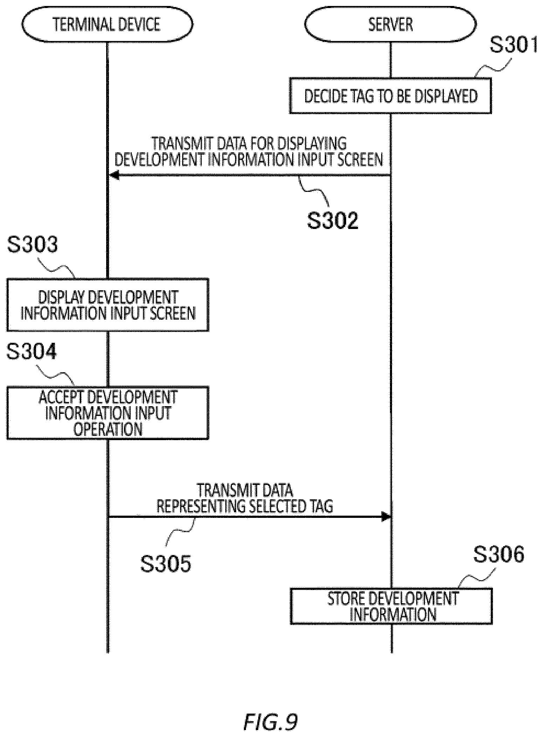

Next, processing of inputting the development information 51 with regard to the second user as an associated user who is associated with the first user will be described with reference to Fig. 9.

First, the development information management unit 219 decides a tag 61 to be displayed on the development information input screen 60 (step S301). Herein, the development information management unit 219 decides a tag 61 to be displayed on the development information input screen 60 based on an incident in a battle which serves as a trigger to associate the second user with the first user (in other words, a battle in which the second user satisfies a registration condition set by the first user (herein, the registration condition is set as "offered resurrection three or more times during one battle")). Specifically, for example, the development information management unit 219 decides a tag 61 "offered resurrection" as the tag 61 to be displayed based on a character of the second user who has resurrected a character of the first user in this battle. For example, in a case where a character of the second user attacks together another party whom a character of the first user attacks in this battle, a tag 61 "offered assisting attack" is decided as the tag 61 to be displayed. For example, in a case where the first user and the second user have fought together to win this battle, a tag 61 "fought together" and a tag 61 "won" are decided as the tags 61 to be displayed. Note that with regard to the processing in step S301, a table representing a corresponding relationship between an incident which may occur in a battle and the tag 61 to be displayed may be stored in the storage unit 220, and by using the table, the development information management unit 219 may extract a tag 61 corresponding to an incident which has actually occurred in the battle to be decided as the tag 61 displayed on the development information input screen 60.

Subsequently, the development information management unit 219 transmits information required to display the development information input screen 60 which includes information with regard to the tag 61 to be displayed to the terminal device 10 of the first user (step S302).

When the transmission and reception unit 112 of the terminal device 10 of the first user receives the information, the display control unit 114 of the terminal device 10 of the first user causes the development information input screen 60 to be displayed (step S303). On this development information input screen 60, the tag 61 decided to be displayed in step S301 is displayed.

Subsequently, the operation acceptance unit 111 of the terminal device 10 of the first user accepts an input operation of selecting a tag 61 to be attached as the development information 51 with regard to the second user from among tags 61 to be displayed on the development information input screen 60 (step S304). In other words, during the display of the development information input screen 60, an input operation of inputting the development information 51 is accepted.

In the terminal device 10 of the first user, when the input operation of selecting the tag 61 is accepted, data representing the selected tag 61 (in other words, data related to the input development information) is sent from the transmission and reception unit 112 of the terminal device 10 to the associated user management unit 215 (step S305).

When the data representing the selected tag 61 is received, the development information management unit 219 attaches the selected tag 61 to the second user as the development information 51 of the second user to be stored in the storage unit 220 (step S306). In other words, the development information management unit 219 registers the development information 51 of the second user based on the input operation with the terminal device 10.

Note that herein, the tags 61 to be selected may be one tag or may be a plurality of tags.

### Processing related to display of classification list

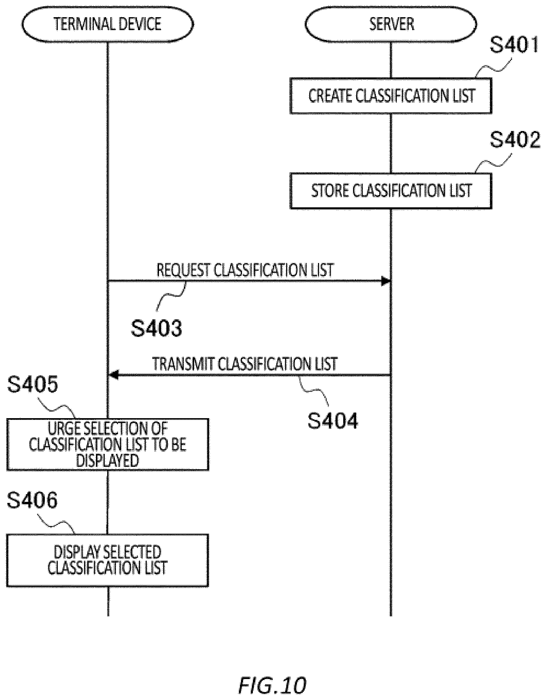

Next, processing related to creation and display of a classification list in which a plurality of associated users who are associated with the first user are classified according to an attribute of the associated user will be described with reference to Fig. 10.

First, the list creation unit 218 classifies a plurality of associated users who are associated with the first user by each attribute of the associated user to create a classification list (step S401). Specifically, the list creation unit 218 refers to the user information 223 of each associated user to classify the associated users to create a classification list. For example, the list creation unit 218 classifies, as an associated user who is good at attacking, an associated user whose character to be used is a character who is good at attacking and creates a classification list in which associated users who are good at attacking are grouped. For example, the list creation unit 218 classifies, as an associated user who is good at healing, an associated user whose character to be used is a character who is good at healing and creates a classification list in which associated users who are good at healing are grouped.

The list creation unit 218 causes the storage unit 220 serving as the classification list storage unit to store a plurality of created classification lists (step S402).

Upon display of the classification list, first, the terminal device 10 of the first user requests the server 20 to transmit the classification list (step S403). The associated user management unit 215 transmits the classification list to the terminal device 10 of the first user based on the request (step S404). Herein, it is assumed that a classification list of associated users who are good at attacking and a classification list of associated users who are good at healing are transmitted.

Subsequently, the display control unit 114 of the terminal device 10 of the first user causes the display unit 18 to display a screen (for example, the classification list display screen 70 illustrated in Figs. 5A and 5B) for urging a selection of a classification list to be displayed (for example, a selection as to which one of the classification list of the associated users who are good at attacking and the classification list of the associated users who are good at healing is to be displayed) (step S405). During the display of the screen, the operation acceptance unit 111 accepts an input operation of selecting a classification list to be displayed.

When the input operation of selecting the classification list to be displayed is performed, the display control unit 114 causes the display unit 18 to display the selected classification list (step S406).

Note that the list creation unit 218 may be included in the terminal device 10. The classification list storage unit (for example, the storage unit 120) which stores the classification list may be included in the terminal device 10. In this case, the display control unit 114 may cause the display unit 18 to display a classification list selected by a user from among a plurality of classification lists stored in the terminal device 10 (steps S405 and S406).

### Modified example of processing related to display of classification list

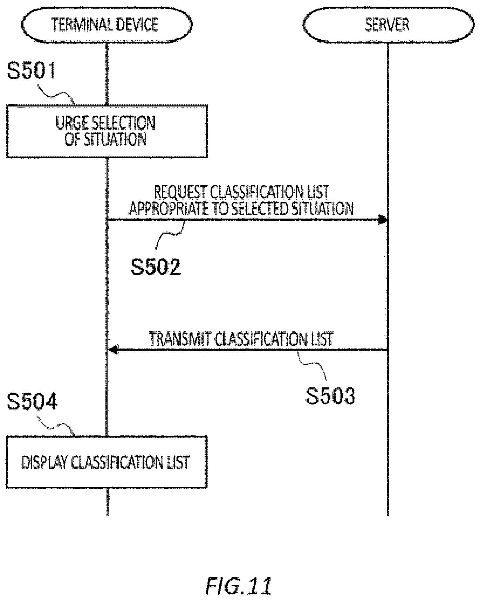

Next, a modified example of the processing related to creation and display of the classification list in which the plurality of associated users who are associated with the first user are classified according to the attribute of the associated user will be described with reference to Fig. 11.

First, the display control unit 114 of the terminal device 10 of the first user causes the display unit 18 to display a screen for urging a selection of a situation (for example, a situation in a game to be played by the first user) (step S501). During the display of the screen, the operation acceptance unit 111 accepts an input operation of selecting a situation. Specifically, the operation acceptance unit 111 accepts an input operation of selecting a stage (in other words, a map) as the situation.

Subsequently, the terminal device 10 of the first user requests the server 20 to transmit a classification list appropriate to the situation (specifically, the stage) which has been selected (step S502). The associated user management unit 215 transmits a classification list of an associated user having an attribute appropriate to the selected situation to the terminal device 10 of the first user based on the request (step S503). Specifically, for example, in a case where the first user performs an input operation of selecting a first stage from among a plurality of stages including the first stage and a second stage, the associated user management unit 215 transmits, to the terminal device 10 of the first user, a classification list in which associated users having a high win rate in a past combat in the first stage among a plurality of associated users who are associated with the first user are grouped. Note that the classification list to be transmitted from the associated user management unit 215 to the terminal device 10 herein may be created by the list creation unit 218 based on the request or may be extracted based on the request from a plurality of classification lists previously created by the list creation unit 218 and stored in the storage unit 220. Note that the list creation unit 218 may be included in the terminal device 10. The classification list storage unit (for example, the storage unit 120) which stores the classification list may be included in the terminal device 10.

Subsequently, the display control unit 114 of the terminal device 10 of the first user causes the display unit 18 to display the classification list of the associated user having the attribute appropriate to the selected situation which has been transmitted from the server 20 (step S504).

Note that the present invention is not limited to the embodiments described above and can be modified and implemented in various manners in a range without departing from a spirit of the invention. For the present invention, within a scope of the invention, a free combination of each component, a modification of any component, an omission of any component, or the like is possible. A flow of processing described in the present specification is merely an example, and an order or a configuration of each processing may vary.

### Clauses

Items explained in the above embodiments may also be described as in the following clauses.

### Clause 1

A program for causing a computer to function as:
an association unit (for example, the association unit 216) which automatically associates, with a first user, a second user who has decided to share, is sharing, or has shared a predetermined experience in a predetermined service with the first user.

According to the configuration described above, an operation or the like of designating another party to follow, which is usually required in a case of following another user or the like in the predetermined service such as a game, is not needed. Accordingly, it is facilitated to perform association between users. By automatically following another user, it is possible to enable collection of information or the like to consider an interaction policy in a future (for example, whether or not to become a friend or the like).

### Clause 2

The program according to clause 1 in which the second user is a user who has decided to use, is using, or has used predetermined content in the predetermined service together with the first user.

According to the configuration described above, it is possible to easily follow another user who has used the content together or the like.

### Clause 3

The program according to clause 1 or 2, in which
the automatically associating the second user with the first user is to automatically register the second user as a user whom the first user is to follow,
the association unit further allows mutually associating the first user and the second user to be registered as friends with each other,
in a case where the first user follows the second user, as compared with a case where the first user does not follow the second user, the first user is more advantageous in terms of viewing of information related to the second user, and
in a case where the first user follows the second user and the first user and the second user are not registered as friends, a specific function which is usable between users who are friends is not usable between the first user and the second user.

According to the configuration described above, it is possible to automatically follow another user in a configuration in which it is possible to register another user as a friend and follow another user.

### Clause 4

The program according to clause 1 or 2, in which the second user is a user who has a predetermined relationship with the first user in the predetermined service.

According to the configuration described above, it is possible to automatically follow a user having a predetermined relationship among users who share a predetermined experience or the like, and a restriction can be imposed on a user to automatically follow.

### Clause 5

The program according to clause 3, in which the predetermined relationship is a relationship which is set by the first user and which satisfies a condition for automatically associating another user with the first user.

According to the configuration described above, each user can set a condition on a user or the like whom the user desires to automatically follow.

### Clause 6

An information processing apparatus including an association unit (for example, the association unit 216) which automatically associates, with a first user, a second user who has decided to share, is sharing, or has shared a predetermined experience in a predetermined service with the first user.

According to the configuration described above, actions and effects similar to those of the program according to clause 1 can be attained.

### EXPLANATION OF REFERENCES

1: system; 10: terminal device; 11: processor; 12: memory; 13: storage; 16: touch screen; 17: input unit; 18: display unit; 20: server; 21: processor; 22: memory; 23: storage; 50: associated user list display screen; 51: development information; 60: development information input screen; 61: tag; 70: classification list display screen; 75: stage selection screen; 110: control unit; 111: operation acceptance unit; 112: transmission and reception unit; 113: progression unit; 114: display control unit; 120: storage unit; 210: control unit; 211: transmission and reception unit; 212: server processing unit; 214: synchronization processing unit; 215: associated user management unit; 216: association unit; 217: release unit; 218: list creation unit; 219: development information management unit; 220: storage unit.

## Claims

1. A program for causing a computer to function as:
an association unit which automatically associates, with a first user, a second user who has decided to share, is sharing, or has shared a predetermined experience in a predetermined service with the first user.

2. The program according to claim 1, wherein
the second user is a user who has decided to use, is using, or has used predetermined content in the predetermined service together with the first user.

3. The program according to claim 1 or 2, wherein
the automatically associating the second user with the first user is to automatically register the second user as a user whom the first user is to follow,
the association unit further allows mutually associating the first user and the second user to be registered as friends with each other,
in a case where the first user follows the second user, as compared with a case where the first user does not follow the second user, the first user is more advantageous in terms of viewing of information related to the second user, and
in a case where the first user follows the second user and the first user and the second user are not registered as friends, a specific function which is usable between users who are friends is not usable between the first user and the second user.

4. The program according to claim 1 or 2, wherein
the second user is a user who has a predetermined relationship with the first user in the predetermined service.

5. The program according to claim 4, wherein
the predetermined relationship is a relationship which is set by the first user and which satisfies a condition for automatically associating another user with the first user.

6. An information processing apparatus comprising:
an association unit which automatically associates, with a first user, a second user who has decided to share, is sharing, or has shared a predetermined experience in a predetermined service with the first user.
